Europäisches Patentamt

**European Patent Office**

**Office européen des brevets**

(19)

(11) Numéro de publication: **0 236 195**
**B1**

## FASCICULE DE BREVET EUROPEEN

(12)

(45) Date de publication du fascicule du brevet:
**31.01.90**

(21) Numéro de dépôt: **87400308.0**

(22) Date de dépôt: **12.02.87**

(51) Int. Cl.⁴: **G11B 5/55**, G11B 5/596,
G11B 21/08

(54) **Procédé pour déplacer un système mobile par rapport à un support d'informations et dispositif pour le mettre en oeuvre.**

(30) Priorité: **14.02.86 FR 8602022**

(43) Date de publication de la demande:
**09.09.87 Bulletin 87/37**

(45) Mention de la délivrance du brevet:
**31.01.90 Bulletin 90/5**

(84) Etats contractants désignés:
**DE FR GB IT NL SE**

(56) Documents cités:
**GB-A- 2 060 941**
**US-A- 4 491 776**
**US-A- 4 591 933**

**IEEE TRANSACTIONS ON MAGNETICS, vol.
MAG-17, no. 4, juillet 1981, pages 1396-1402, IEEE, New
York, US; C. MAURY: "High track density for magnetic
disk drives with an "embedded servo" positioning
system"**
**IBM TECHNICAL DISCLOSURE BULLETIN,
vol. 19, no. 5, octobre 1976, page 1884, New York, US;
J.W. REED: "Access-control system with reduced
velocity error"**

(73) Titulaire: **BULL S.A., 121 avenue de Malakoff P.B. 193.16,
F-75764 Paris Cédex 16(FR)**

(72) Inventeur: **Pinson, Denis, Chemin de Justice
Goupillieres, F-78770 Thoiry(FR)**

(74) Mandataire: **Gouesmel, Daniel et ai, BULL S.A. Industrial
Property Department 25 avenue de la Grande-Armée
GA-4X018, F-75016 Paris(FR)**

## Description

La présente invention concerne un procédé pour déplacer un système mobile par rapport à un support d'informations et le dispositif pour le mettre en oeuvre. Elle est plus pariculièrement applicable au déplacement des têtes de lecture/écriture des mémoires à disques utilisées dans les systèmes de traitement de l'information.

Une mémoire à disque(s) magnétique (s) se caractérise par sa grande capacité de stockage et par le temps relativement court mis par les têtes magnétiques d'écriture / lecture des informations contenues sur les disques, à accéder à toute information contenue en un point quelconque de ceux-ci à partir du moment où elles ont reçu l'ordre d'accéder à cette information. Le temps tel que défini ci-dessus est appelé temps d'accès.

Les informations des disques magnétiques sont enregistrées sous forme codée binaire sur des pistes d'enregistrement concentriques circulaires dont la largeur n'excède pas quelques dizaines de microns et qui sont disposées sur leurs deux faces.

A chaque face d'un disque magnétique est associée au moins une tête magnétique d'écriture / lecture disposée à une distance de quelques dixièmes de microns de cette face.

Dans la pratique courante, et plus particulièrement dans le cas des mémoires qui comportent un nombre limité de disques (généralement inférieur à 4 ou 5). Les informations contenues sur chaque face d'un disque sont de préférence réparties sur des secteurs circulaires égaux et adjacents. Habituellement une face d'un disque est divisée en plusieurs dizaines de secteurs (le plus souvent 40 à 50). Une telle répartition d'informations sur disques magnétiques est par exemple décrite dans le brevet Français 2.466.078 déposé par la Compagnie Internationale pour l'Informatique Cii Honeywell Bull le 21 Septembre 1979.

Chaque secteur est divisé en deux aires inégales. L'aire la plus grande comprend des informations destinées à être traitées par le système de traitement de l'information auquel la mémoire à disques appartient (appelées données à traiter), alors que l'aire la plus petite comprend des informations nécessaire à l'asservissement de position au-dessus des pistes de la tête magnétique associée à la face du disque contenant ces informations. Les informations de repérage des pistes comprennent notamment les adresses des pistes. On rappelle que l'adresse d'une piste est l'expression codée du numéro d'ordre j d'une piste affecté à celle-ci, j étant un nombre entier variant de zéro à NP-l, NP étant le nombre total des pistes d'enregistrement. Lorsque la tête magnétique de lecture associée à une face de disque se trouve en regard d'un secteur déterminé de celui-ci et lit une adresse donnée, cela signifie qu'elle se trouve en regard de la piste du numéro d'ordre j correspondant à cette adresse. l'adresse représente donc la position occupée par la tête en regard de la face du disque.

Le disque ayant une vitesse de rotation constante, le temps mis par le disque pour que la tête de lecture voie défiler devant elle deux secteurs successifs est identique d'un secteur à l'autre. Ce temps T séparant le passage de deux secteurs successifs devant la tête de lecture est appelé "période d'échantillonnage".

La position occupée par la tête (l'adresse lue par la tête) est donc connue toutes les T secondes, et les instants correspondants sont appelés "instants d'échantillonage".

La tendance actuelle du développement des mémoires à disques est de chercher à diminuer le temps d'accès. Pour cela il est nécessaire que la tête puisse se déplacer d'une piste de départ à la piste d'arrivée dans le temps le plus court possible et être positionée avec précision en regard de cette dernière.

On connait ainsi des dispositifs permettant de déplacer et de positionner la tête en répondant à ces exigences. Ces dispositifs utilisent un moteur électrodynamique du type "Voice Coil" comportant une bobine se déplaçant linéairement à l'intérieur d'un aimant permanent. Cette bobine est relié mécaniquement à un chariot qui porte les têtes magnétiques associées à chacune des faces des disques de la mémoire à disques par l'intermédiaire d'un bras de suspension.

On imprime à un tel dispositif de déplacement et de positionnement de la tête un mouvement comprenant deux phases l'une d'accélération et l'autre de décélération. Au cours de la première phase, on applique à la bobine du moteur un courant constant ayant un sens déterminé. Généralement cette première phase s'effectue en boucle ouverte (c'est-à-dire que le système de positionnement de la tête est non asservi) et s'effectue à acolération constante.

Au cours de la deuxième phase, le mouvement de la tête est généralement asservi et le sens du courant est opposé à celui de la première phase.

On connait différents moyens d'asservir le mouvement de la tête pendant cette seconde phase. De tels moyens sont décrits respectivement dans les brevets Français 2 336 768 déposé le 24 Décembre 1975 et 2 258 661 déposé le 18 Janvier 1974 et enfin le brevet 2 466 078 précité, tous ces brevets ayant été déposés par la Compagnie internationale pour l'Informatique Cii Honeywell Bull.

Le brevet 2 366 768 décrit un dispositif pour déplacer un système mobile par rapport à un disque magnétique où le courant dans la bobine est fonction de la comparaison entre la position occupée par la tête et la position de la piste d'arrivée. On asservit donc le mouvement de la tête à la position occupée par celle-ci.

Le brevet 2 258 661 décrit un système pour déplacer un systeme mobile par rapport à un disque magnétique où le courant dans la bobine durant la seconde phase est fonction de la comparaison entre une vitesse théorique de référence fournie par une mémoire et la vitesse réelle mesurée du système de positionnement de la tête.

Le brevet 2 466 078 décrit un système de positionnement asservi en accélération. Le courant dans le moteur, lors de la phase de décélération, est fonction de la comparaison entre une accélération de consigne (qu'on peut appeler également accélération de référence) et l'accélération mesurée du système de positionnement de la tête.

Le brevet US-A 4 491 776 décrit un procédé pour déplacer un système mobile par rapport à un support d'informations, le système étant mû par un moteur électrique comportant au moins une tête de lecture/écriture des informations.

Ce procédé est caractérisé en ce qu'on compare la position et la vitesse calculée que possède la tête à un instant d'échantillonnage déterminé avec une position et une vitesse de référence audit instant d'échantillonnage. Le résultat de cette comparaison donne une quantification de l'erreur et permet de calculer une tension de commande qui est fonction de cette erreur.

Les systèmes de positionnement dont le principe est brièvement décrit ci-dessus, s'ils permettent d'obtenir des temps d'accès et une précision corrects, ne satisfont plus aux exigences désormais requises en la matière.

En outre, pour une énergie donnée, fournie au système de positionnement, on estime que le temps d'accès des systèmes ci-dessus décrits est trop grand. De même, pour un temps d'accès donné, on estime que l'énergie dépensée par ces systèmes de positionnement est trop grande.

La présente invention permet de remédier à ces inconvénients en réduisant sensiblement l'énergie dépensée pour un temps d'accès donné, ou le temps d'accès pour une énergie donnée. D'autre part, les performances obtenues (temps d'accès, précision) sont relativement constantes d'une mémoire à disques d'un type donné à une autre mémoire à disque du même type.

L'invention consiste à asservir le dispositif de déplacement de la tête magnétique sur le vecteur d'état donnant à la fois la position et la vitesse de la tête, à chaque instant d'échantillonnage par comparaison entre un vecteur d'état dont on prédit la valeur pour chaque instant d'échantillonnage et un vecteur d'état de référence pour ce même instant.

Selon l'invention le procédé pour déplacer un système mobile par rapport à un support d'informations enregistrées sur une pluralité de pistes, le système étant mû par un moteur électrique alimenté en tension/courant par un générateur d'alimentation commandé lui-même par une tension de commande et comportant au moins une tête de lecture/écriture des informations déplacée sur une trajectoire donnée d'une piste de départ à une piste d'arrivée, la position de la tête sur la trajectoire étant mesurée à des instants d'échantillonnage déterminés par un capteur de position, la vitesse étant calculée, la position et la vitesse étant comparées avec une position et une vitesse de référence, ladite comparaison permettant de calcule ladite tension de commande est caractérisé en ce que:

1) on prédit pour chaque instant d'échantillonnage déterminé, la valeur du vecteur d'état donnant la position et la vitesse de la tête mesurée par le capteur de position et de la tension de commande considérées à l'instant d'échantillonnage précédent,

2) on compare le vecteur d'état prédit à un vecteur d'état de référence donnant la position et la vitesse de référence que soit avoir la tête à l'instant d'échantillonnage déterminé,

3) on calcule ladite tension de commande en fonction d'une tension de commande de référence du moteur à l'instant d'échantillonnage déterminé et de la différence entre le vecteur d'état prédit et le vecteur d'état de référence.

Selon une caractéristique préférée du procédé selon l'invention, l'estimation du vecteur d'état tient compte des bruits de mesure sur les variables observées (position, erreur sur la tension de commande) et des bruits qui affectent le vecteur d'état.

L'invention concerne également un dispositif de mise en œuvre du procédé décrit ci-dessus qui est caractérisé en ce qu'il comprend:

– des moyens d'observation d'état pour prédire, à chaque instant d'échantillonnage déterminé la valeur du vecteur d'état, qui reçoivent la valeur de la position de la tête mesurée par le capteur de position à l'instant d'échantillonnage précédent, ainsi que la valeur de la tension de commande à ce même instant,

– des moyens de mémorisation de la tension de la commande de référence et du vecteur d'état de référence pour chaque instant d'échantillonnage,

– des moyens pour comparer le vecteur d'état prédit avec le vecteur d'état de référence et calculer leur différence,

des moyens de correction de la tension, de commande, qui reçoivent la tension de référence et la différence entre le vecteur d'état prédit et le vecteur d'état de référence et calculent une tension de correction qui est retranchée de la tension de commande de référence.

De préférence, les moyens d'observation d'état sont constitués par un observateur d'état de Kalman, dont la matrice de Kalman est constante.

Le procédé selon l'invention ainsi que le dispositif pour le mettre en œuvre permettent d'obtenir des temps d'accès beaucoup plus courts que les procédés selon l'art antérieur tout en nécessitant sensiblement moins d'énergie fournie au système de positionnement

D'autres caractéristiques et avantages de la présente invention apparaîtront dans la description suivante donnée à titre d'exemple non limitatif et en se référant aux dessins annexés :

Sur ces dessins :

- la figure 1 : est un ensemble de figures 1a à 1d qui montrent un exemple préféré de répartition des informations sur une face d'un disque magnétique,
- la figure 2 : est une vue en coupe schématique montrant le système mobile par rapport à un disque magnétique, que l'on cherche à déplacer au moyen du procédé selon l'invention,
- la figure 3 : est un bloc diagramme simplifié du dispositif de déplacement d'un système mobile par rapport à un support d'informations tel q'un disque magnétique, mettant en oeuvre le procédé selon l'invention,
- la figure 4 : montre la loi de courant choisie en fonction du temps pour alimenter en courant la bobine mobile du moteur linéaire qui entraîne le système mobile selon le procédé de l'invention,
- la figure 5 : est une courbe montrant la vitesse du système mobile en fonction de la distance telle qu'elle résulte de l'application de la loi d'alimentation en courant du moteur en fonction du temps représentée à la figure 4,
- la figure 6 : est une série de trois courbes montrant respectivement, en fonction du temps, l'évolution du courant d'alimentation du moteur de référence, la vitesse de référence, la position de référence, lors de la phase finale du mouvement du système mobile, c'est-à-dire lors de la phase de décélaration,
- la figure 7 : composée des figures 7a et 7b où la figure 7b est une vue détaillée d'une partie de la figure 7a, montre comment on détecte la position et la vitesse du système mobile pour lesquelles on passe en phase de décélération,
- la figure 8 : composée des figures 8a et 8b est une vue plus détaillée du bloc diagramme de la figure 3, où chacun des éléments constituant ce dernier est décomposé en plusieurs blocs fonctionnels.

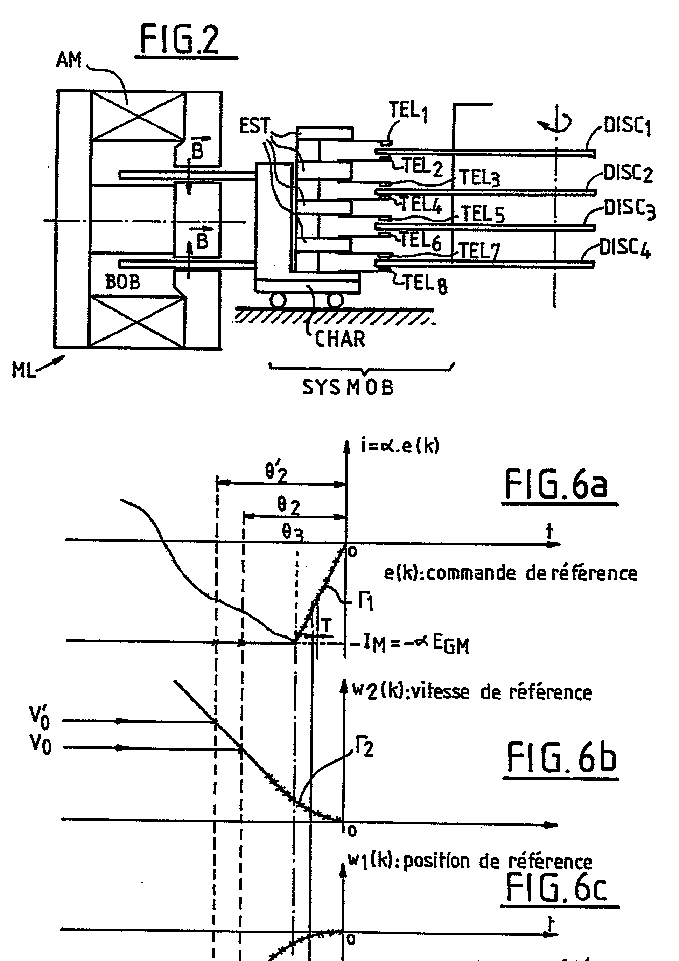

Afin de mieux comprendre comment est constitué et comment fonctionne le dispositif de déplacement d'un système mobile par rapport à un support d'enregistrement tel qu'un disque magnétique mettant en oeuvre le procédé selon l'invention, il est utile de faire quelques rappels illustrés par les figures 1a à 1d, et par la figure 2 montrant d'une part comment sont réparties les informations sur une face d'un disque magnétique (figures 1a à 1d) et d'autre part, comment est constitué le système mobile que l'on cherche à déplacer.

## RAPPELS CONCERNANT LA REPARTITION DES INFORMATIONS SUR UNE FACE D'UN DISQUE.

On considère les figures 1a à 1d.

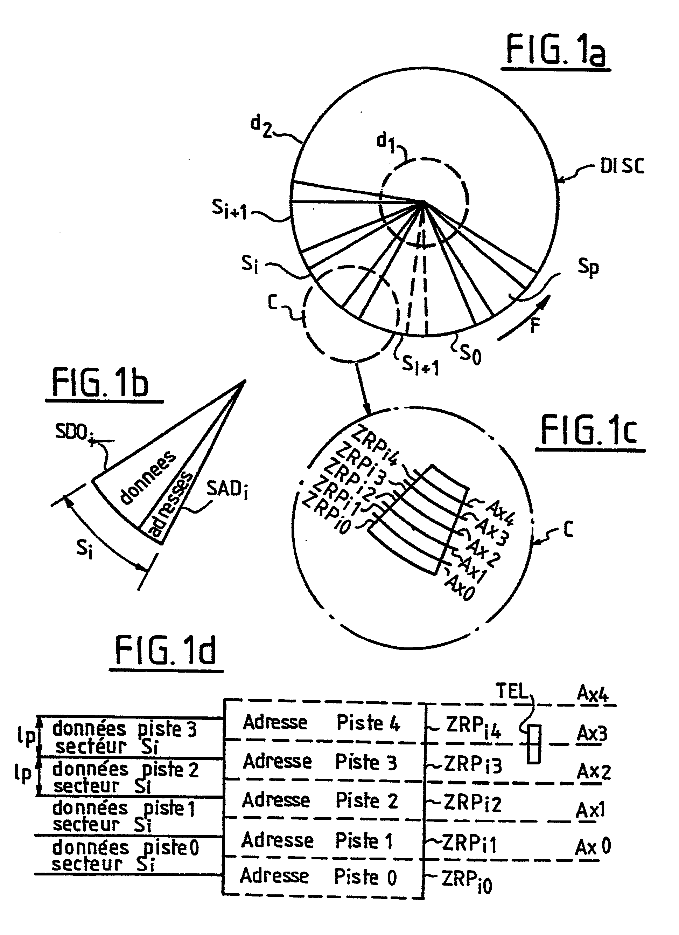

A la figure 1a, le disque DISC tourne dans le sens de la flèche F. Sa surface utile d'enregistrement est délimitée par les cercles d1 et d2. Ces deux cercles définissent respectivement une piste d'enregistrement intérieure de numéro d'ordre 0 et une piste d'enregistrement extérieure de numéro d'ordre NP-I, où NP est le nombre total de pistes. On définit sur le disque DISC, p secteurs circulaires égaux et adja-cents $S_0$, $S_1$, $S_i$, $S_{i+l}$, $S_p$. Ainsi qu'on peut mieux le voir à la figure 1b, tout secteur $S_i$ comprend deux par-ties $SDO_i$, $SAD_i$ où sont respectivement enregistrées d'une part les données à traiter et d'autre part les informations de repérage des pistes comprenant les adresses de celles-ci. La surface de la partie $SAD_i$ ne représente que quelques pour cent de la surface de la partie $SDOi$.

Les figures 1c et 1d sont une vue agrandie de la partie $SAD_i$ du secteur $S_i$ comprise à l'intérieur du cercle C.

Chaque partie $SAD_i$ de ce secteur est divisée en NP zones de référence, $ZRP_{i0}$, $ZRP_{il}$,...., $ZRP_{ij}$,..... $ZRP_{i(N-I)}$. Pour simplifier on n'a représenté que les zones de référence $ZRP_{i0}$ à $ZRP_{i4}$ aux figures 1c et 1d, ces zones étant symbolisées par des rectangles à la figure 1d.

Les frontières entre les différentes zones de référence $ZRP_{ij}$ sont confondues avec les cercles $Ax_j$ définissant le milieu des pistes d'enregistrement du disque magnétique DISC. On voit que dans chaque secteur $S_i$ à la piste de numéro d'ordre i, de cercle milieu $Ax_j$ sont associées les zones de référence $ZRP_{ij}$ et $ZRP_{i(j+l)}$. Ainsi à la piste de numéro d'ordre 0 sont associées les deux zones de référence $ZRP_{i0}$ et $ZRP_{il}$, à la piste de numéro d'ordre 1 sont associées les zones de référence $ZRP_{il}$, $ZRP_{i2}$, et ainsi de sui-te.

Chaque zone de référence $ZRP_{ij}$ comprend notamment des informations binaires représentant l'adresse de la piste de numéro d'ordre j. Ainsi, la zone de référence $ZRP_{i0}$ comprend des informations binaires représentant l'adresse de la piste 0, la zone de référence $ZRP_{il}$ des informations binaires représentant l'adresse de la piste de numéro d'ordre 1 et ainsi de suite.

Lorsque la tête de lecture / écriture TEL associée à la face du disque magnétique DISC se déplace d'une piste de départ A, à une piste d'arrivée B, elle lit dans chaque secteur l'adresse de la piste au-dessus de laquelle elle se trouve, et ce, toutes les T secondes, où T a été défini plus haut. Si, V est la vites-

4

se de rotation du disque magnétique DISC exprimé en tours par minute, et p le nombre total de secteurs, le temps T qui s'écoule entre le passage de deux secteurs successifs en regard de la tête magnétique TEL est donc :

$T = 60/(V \times p)$

Ainsi, si la vitesse de rotation V est de 3600 tours par minute, et p le nombre de secteurs égal à 50, on a :

$T = 333,3$ microsecondes.

Les signaux de lecture de la tête TEL correspondant aux informations binaires des adresses lues dans les zones de référence sont envoyés à des circuits électroniques de mise en forme décrits dans le brevet 2.466.078. L'adresse lue par la tête TEL, mise en forme par les circuits de lecture associés, représente la position occupée par la tête de lecture en regard du DISC, entre les pistes A et B. On montre dans ce dernier brevet que la précision de détermination de la position de la tête est égale à une demi-piste.

## DESCRIPTION DU SYSTEME MOBILE A DEPLACER.

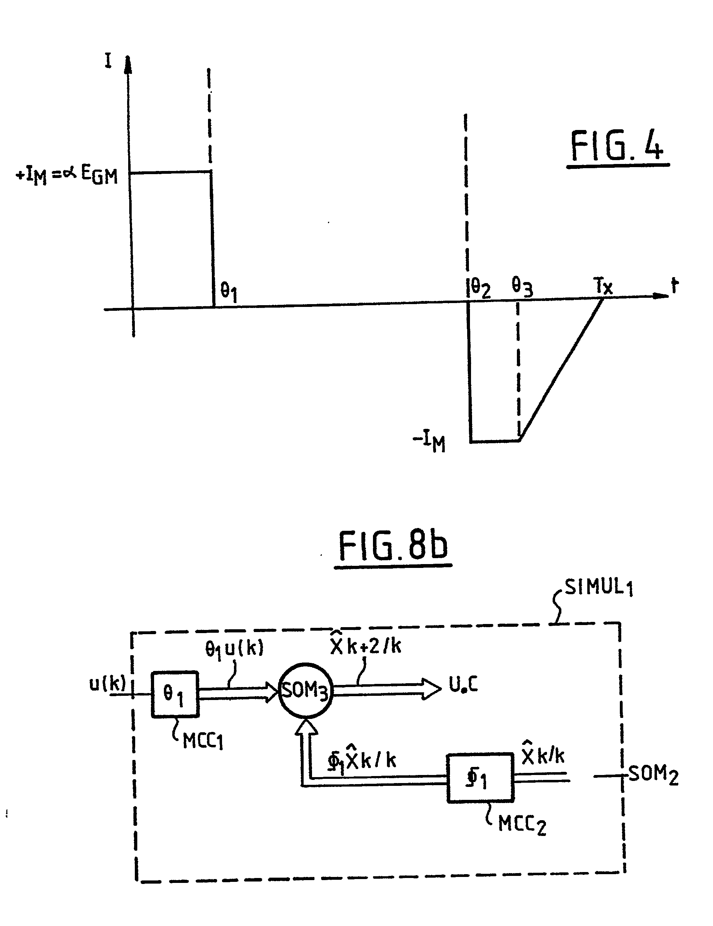

On considère la figure 2 qui montre un sysème mobile SYSMOB permettant de déplacer des têtes de lecture / écriture $TEL_1$ à $TEL_8$ associées aux huit faces des 4 disques magnétiques $DISC_1$ à $DISC_4$. Ces têtes $TEL_1$ à $TEL_8$ sont solidaires d'un chariot mobile CHAR par l'intermédiaire d'un ensemble de suspension de têtes EST. Le chariot et les têtes se déplacent radialement par rapport aux disques $DISC_1$ à $DISC_4$ suivant une trajectoire linéaire déterminée. Le chariot CHAR est lui-même solidaire mécaniquement de la bobine BOB mobile d'un moteur électrodynamique linéaire ML de type "Voice Coil" qui comporte un aimant permanent AM à l'intérieur duquel elle se déplace. Elle est alimentée par un courant I dont la forme sera précisée plus loin en relation avec la figure 4.

On voit donc que le système mobile SYSMOB est en fait constitué de la bobine BOB, du chariot CHAR, de l'ensemble de suspension de têtes EST et des têtes $TEL_1$ à $TEL_8$.

## EQUATION DU MOUVEMENT DU SYSTEME MOBILE.

Pour mieux comprendre comment fonctionne le dispositif mettant en oeuvre le procédé pour déplacer le système mobile SYSMOB par rapport au disque magnétique $DISC_1$ à $DISC_4$, selon l'invention, il est nécessaire d'établir l'équation du mouvement de ce système mobile. On mesure la position $x(t)$ et la vitesse $v(t)$ du système selon ladite trajectoire déterminée.

La bobine BOB comprend une pluralité de tours dont une longueur 1 du fil est soumise à l'induction B créée par l'aimant permanent AM. Elle est alimentée par un courant $i(t)$ fonction du temps.

Le passage du courant $i(t)$ dans la bobine développe une force F appliquée au système mobile qui est la suivante :

$F(t) = B . l . i(t) = K_0 . i(t)$ (1) où l'on a $K_0 = B . l$ (2)

Si l'on désigne par f les forces extérieures agissant sur le chariot, telle que la tension mécanique des fils amenant le courant $i(t)$à la bobine BOB, l'inclinaison du système mobile, et par $f_1(t)$ les forces de frottement sec où :

$f_1(t) = f_0 . sign(v(t))$ (3)

où $f_0$ est le module de la force, l'équation mécanique du mouvement peut s'écrire :

$F(t) = M \cdot \gamma(t) + f + f_1(t)$ (4)

Si l'on pose:

$f_2 = f_0 + f_1$ (5)

on en déduit:

$$i(t) = \frac{M}{K_0} \cdot \frac{d_v}{dt} + \frac{f_2}{K_0} = \frac{M}{K_0} \cdot \frac{d^2x}{dt^2} + \frac{f_2}{K_0} \quad (6)$$

Posons
$$\frac{d_2x}{dt^2} = \dot{x}_2 \quad (7)$$

et
$$\frac{dx}{dt} = \dot{x}_1 \quad (8) \quad avec \quad x(t) = x1$$

Le mouvement régi par l'équation (6) est du second ordre et il y a donc deux variables d'état, à savoir $\dot{x}_2$ et $\dot{x}_1$ représentant respectivement l'accélération et la vitesse du système.

Si l'on cherche à écrire l'équation du mouvement sous forme d'une représentation d'état, on obtient l'équation suivante :

$$\begin{bmatrix} \dot{x}_1 \\ \dot{x}_2 \end{bmatrix} = \begin{bmatrix} 0 & 1 \\ 0 & 0 \end{bmatrix} \begin{bmatrix} x_1 \\ x_2 \end{bmatrix} + \begin{bmatrix} 0 & 0 \\ \dfrac{K_0}{M} & \dfrac{-1}{M} \end{bmatrix} \begin{bmatrix} i \\ f_2 \end{bmatrix} \quad (9)$$

Dans la pratique, la force $f_2$ est négligeable et, sous forme vectorielle, l'équation (9) devient:

$$\begin{cases} \dot{\underline{X}} &=& A & \underline{X} & +B & i \\ \\ x &=& c^T & \underline{X} \end{cases} \quad (10)$$

Avec

$$A = \begin{bmatrix} 0 & 1 \\ 0 & 0 \end{bmatrix} \quad ; \quad B = \begin{bmatrix} 0 \\ \dfrac{K_0}{M} \end{bmatrix} \quad ; \quad c^T = \begin{bmatrix} 1 & 0 \end{bmatrix}$$

$$\underline{X} = \begin{bmatrix} x_1 \\ x_2 \end{bmatrix}$$

$$\dot{\underline{X}} = \begin{bmatrix} \dot{x}_1 \\ \dot{x}_2 \end{bmatrix}$$

Les quantités $\dot{\underline{X}}$ et $\underline{X}$ sont des vecteurs.

Le moteur est alimenté par un courant i(t). Généralement ce courant est fourni par un amplificateur de commande du type convertisseur tension/courant dont le gain est $\alpha$. Si cet amplificateur est alimenté sous une tension u(t) on a:

$i(t) = \alpha\, u(t)$

et l'équation (10) peut alors s'écrire :

$\dot{\underline{X}} = A\,\underline{X} + B\,\alpha\, u(t)$ (11)

On sait que la solution générale d'une telle équation différentielle s'écrit sous le forme :

$$\underline{X}(t) = e^{A(t-to)} . \underline{X}(t_0) + \int_{t_0}^{t} e^{A(t-\tau)} . B \alpha u(\tau) . d\tau \quad (12)$$

Pour simplifier l'ensemble du raisonnement concernant le mouvement du système mobile, on suppose qu'on cherche à lire les informations sur une seule face de l'un des disques $DISC_1$ à $DISC_4$ (ce qui correspond à ce qui se produit effectivement dans la pratique courante) par exemple la face associée à la tête $TEL_1$. Seule la tête $TEL_1$ est en action, les autres têtes de lecture / écriture $TEL_2$ à $TEL_8$ étant alors inactives.

Ainsi qu'il a été écrit plus haut, la position de la tête (c'est-à-dire l'adresse lue par la tête) n'est connue que toutes les T secondes. La position de la tête TEL n'est donc connue que de manière discrète, c'est-à-dire aux instants 0, T, 2T, ......, kT, (k+1)T, etc.....

On désigne par $\underline{X}(k+1)T$, et $\underline{X}(kT)$, la valeur des vecteurs d'état $\underline{X}$ aux instants (k+1)T et kT.

La solution de (12) s'écrit d'une manière générale:

$$\underline{X}(k+1)T = \Phi\,\underline{X}(kT) + \Theta\, u(kT) \quad (13)$$

que pour simplifier l'écriture on écrit :

$$\underline{X}(k+1) = \phi \cdot \underline{X}(k) + \underline{\theta} u(k) \qquad (14)$$

où l'on a :

$$\phi = e^{AT} = I + AT + \frac{A^2T^2}{2!} + \frac{A^nT^n}{n!} + \cdots (15)$$

et
$$\underline{\theta} = \alpha \, T \cdot \left[ I + \frac{AT}{2!} + \frac{A^2T^2}{3!} + \cdots + \frac{A^nT^n}{(n+1)!} + \cdots \right] xB(16)$$

Le processus continu (c'est-à-dire le mouvement du système mobile SYSMOB régi par l'équation d'état (11)):

$$\dot{\underline{X}}(t) = A \, \underline{X}(t) + B \alpha u(t)$$

avec $\quad x(t) = C^T \underline{X}(t)$

a pour équation discrète :

$$\begin{cases} \underline{X}(k+1) = \phi \, \underline{X}(k) + \underline{\theta} \, u(k) \\ \underline{S}(k) = G \cdot \underline{X}(k) \end{cases} \qquad (14bis)$$

avec $\quad \underline{S}(k) = \begin{bmatrix} x_1(kT) \\ x_2(kT) \end{bmatrix}$ écrit plus simplement $\begin{bmatrix} x_1(k) \\ x_2(k) \end{bmatrix}$

Dans notre application la position de la tête TEL₁ x(k), est confondue avec la variable d'état $x_1(k)$.

d'où $\quad G = \begin{bmatrix} 1 & 0 \\ 0 & 0 \end{bmatrix} \qquad (14ter)$

Si, pour le calcul de

$$\int \text{et } \underline{\theta} \, ,$$

on se limite au développement du premier ordre, on a :

$$\oint = I + AT = \begin{bmatrix} 1 & 0 \\ 0 & 1 \end{bmatrix} + \begin{bmatrix} 0 & 1 \\ 0 & 0 \end{bmatrix} xT$$

$$\oint = \begin{bmatrix} 1 & T \\ 0 & 1 \end{bmatrix} \qquad (10bis)$$

$$\text{et} \qquad \underline{\theta} = \alpha\, T\, x \begin{bmatrix} I + \dfrac{AT}{2!} \end{bmatrix} xB$$

$$= \alpha\, T\, x \left[ \begin{bmatrix} 1 & 0 \\ 0 & 1 \end{bmatrix} + \begin{bmatrix} 0 & T/2 \\ 0 & 0 \end{bmatrix} \right] xB$$

$$= \alpha\, T \begin{bmatrix} 1 & T/2 \\ 0 & 1 \end{bmatrix} x \begin{bmatrix} 0 \\ K_0/M \end{bmatrix}$$

$$\underline{\theta} = \begin{bmatrix} \alpha\, T^2 K_0/2M \\ \alpha\, T K_0/M \end{bmatrix} \qquad (10ter)$$

## ELEMENTS CONSTITUTIFS DU DISPOSITIF POUR DEPLACER LE SYSTEME MOBILE SYSMOB, SELON L'INVENTION.

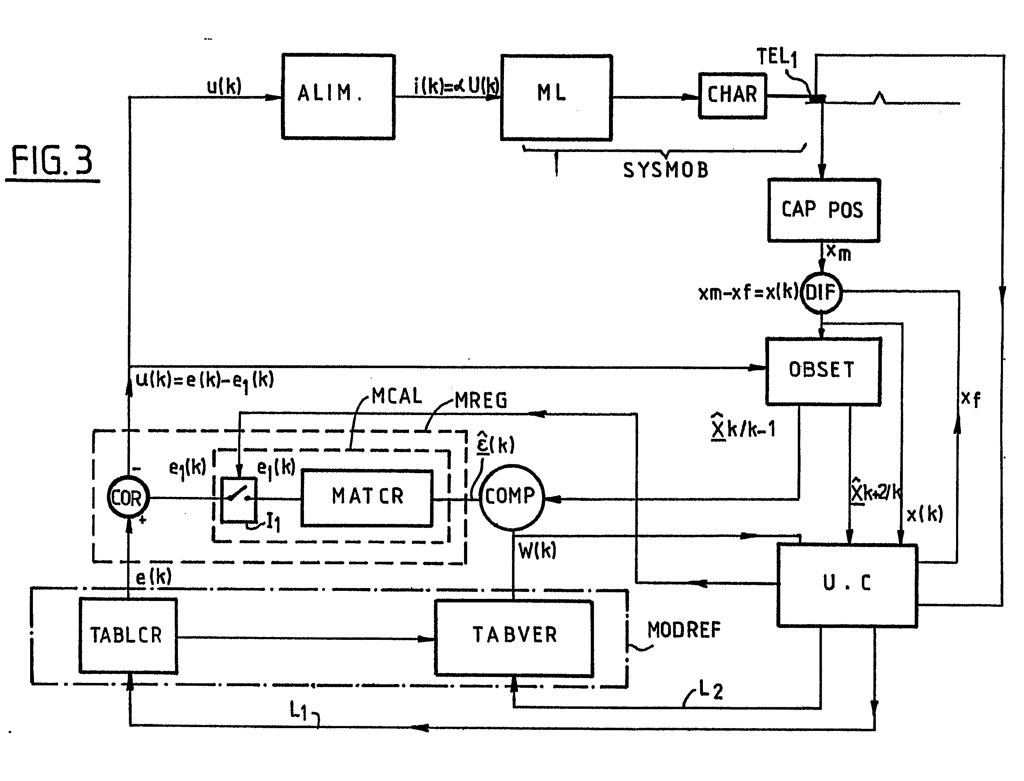

On considère la figure 3 qui montre les différents éléments consitutifs essentiels du dispositif mettant en oeuvre le procédé selon l'invention. Ces éléments sont les suivants :
- le moteur électrodynamique linéaire ML, le système mobile SYSMOB étant constitué comme indiqué ci-dessus en référence à la figure 2,
- le générateur ALIM d'alimentation en courant i(k) de la bobine BOB du moteur ML, commandé par la tension de command u (k) où i (k) = $\alpha$ u (k),
- le capteur de position CAPPOS déterminant la position $x_m$ de la tête $TEL_1$ en regard de la face du disque à laquelle elle est associée, pour chaque instant d'échantillonnage kT

EP 0 236 195 B1

- le soustracteur DIF qui reçoit la position $x_m$ de la tête $TEL_1$ mesurée par le capteur CAPPOS et la position de la piste d'arrivée B, à savoir $x_f$ et effectue la différence $x_m - x_f$ que l'on pose égale à x(k),
- la mémoire de référence MODREF qui contient d'une part, une valeur e(k) d'une tension de commande de référence, et d'autre part un vecteur d'état de référence $\underline{W}(k)$, pour chaque instant d'échantillonnage kT. Le vecteur $\underline{W}(k)$ a pour composante $w_1(k)$ qui est la position de référence et $w_2(k)$ qui est la vitesse de référence, pour le même instant kT,
- l'observateur d'état OBSET qui reçoit d'une part à chaque instant d'échantillonnage kT, x(k-l) la position mesurée à une constante près et d'autre part la tension de commande u (k-l). Il prédit la valeur du vecteur $\underline{X}$ que celui-ci aura à l'instant d'échantillonnage kT, en fonction de la position x(k-l) et de la tension de commande u (k-l) mesurées à l'instant d'échantillonnage (k-l)T. Cette valeur prédite est désignée par $\overset{\wedge}{\underline{X}}_{k/k-l}$,
- le comparateur COMP qui effectue la comparaison entre les vecteurs $\underline{W}(k)$, $\overset{\wedge}{\underline{X}}_{k/k-l}$, et calcule la différence :
$\underline{\varepsilon}(k) = \underline{W}(k) - \overset{\wedge}{\underline{X}}_{k/k-l}$,
- les moyens de régulation MREG qui reçoivent le vecteur (k) et la tension de commande de référence e (k) et délivrent une tension de commande u(k) fonction de e (k) et de $\underline{\varepsilon}(k)$,
- les moyens de calcul MCAL qui reçoivent le vecteur $\underline{\varepsilon}(k)$ et calculent une tension de correction $e_1(k)$ fonction de celui-ci,
- un correcteur COR qui reçoit la tension de commande de référence e(k) et la tension de correction el(k) et délivre une tension de commande u(k) égale à la différence entre e(k) et el(k). Cette tension de commande u(k) est envoyée au générateur de courant ALIM et à l'observateur OBSET.

Lorsque la tête $TEL_1$ est déplacée de la piste de départ A à la piste d'arrivée B, le dispositif de déplacement du système mobile SYSMOB est asservi pendant tout ou partie du parcours effectué par la tête entre les pistes A et B, c'est-à-dire qu'il fonctionne alors en boucle fermée.

PROCEDE MIS EN OEUVRE PAR LE DISPOSITIF SELON L'INVENTION.

Le dispositif représenté à la figure 3 met alors en oeuvre le procédé selon l'invention suivant (pour la partie du parcours où il est asservi) :

-1°) on prédit, à chaque instant d'échantillonnage déterminé (kT), au moyen de l'observateur d'état OBSET, la valeur du vecteur d'état $\overset{\wedge}{\underline{X}}_{k/k-l}$, donnant la position et la vitesse de la tête $TEL_1$ à ce même instant kT à partir de sa position mesurée $x_m$ (et par suite en fonction de la différence $x_m - x_f = x(k-l)$) et de la tension de commande u(k-l) considérées à l'instant d'échantillonnage précédent (k-l)T,

-2°) on compare le vecteur d'état prédit $\overset{\wedge}{\underline{X}}_{k/k-l}$ au vecteur d'état de référence $\underline{W}(k)$ fourni par la mémoire de référence MODREF, au moyen du comparateur COMP,

-3°) on calcule par les moyens de régulation MREG la tension de commande u(k) du générateur ALIM à l'instant kT, en fonction d'une tension de commande de référence e(k) à ce même instant kT et de la différence $\underline{\varepsilon}$ (k) entre le vecteur d'état prédit $\overset{\wedge}{\underline{X}}_{k/k-l}$ et le vecteur d'état de référence $\underline{W}(k)$ fourni par le comparateur COMP. On a :
u(k) = e(k) - el(k) avec el(k) = f($\underline{\varepsilon}$(k))
où el(k) est fourni par les moyens de calcul MCAL.

LOI DE COMMANDE DU COURANT CHOISIE.

Dans un exemple de réalisation préféré de l'invention la loi de commande choisie pour l'alimentation en courant du moteur électrodynamique ML comprend trois phases successives comme indiqué à la figure 4, où l'on a représenté l'évolution du courant i(t) d'alimentation du moteur en fonction du temps t.

Pendant la première phase, jusqu'à l'instant $\theta_1$ le moteur est alimenté par un courant $I_M$ constant et par exemple positif.

Entre les instants $\theta_1$ et $\theta_2$ ( avec $\theta_2 > \theta_1$) le courant dans le moteur est nul.

Entre les instants $\theta_2$ et $T_X$ où $T_X$ est l'instant où la tête $TEL_1$ arrive avec une vitesse nulle en regard de la piste d'arrivée B, le courant est d'abord constant et négatif, égal à $-I_M$ entre les instants $\theta_2$ et $\theta_3$, puis décroît linéairement de la valeur $-I_M$ jusqu'à zéro entre les instants $\theta_3$ et $T_X$.

On montre que cette loi de commande du courant permet de réduire sensiblement l'énergie qu'il est nécessaire de fournir au système SYSMOB pour le déplacer de la piste A à la piste B, dans un temps déterminé. Cette loi permet en outre d'utiliser des circuits de commande très simples. On réalise ainsi une économie substantielle d'exploitation et de réalisation du dispositif de déplacement du système mobile.

La décroissance linéaire du courant entre les instants $\theta_3$ et $T_X$ permet à la tête $TEL_1$ d'arriver en douceur en regard de la piste d'arrivée B, sans dépasser celle-ci. On montre que cela permet de minimiser le terme de correction $e_1(k)$, c'est-à-dire de permettre à la tension $u(k)$ de suivre au plus près la tension de commande de référence $e_{(k)}$.

Il est évident que la loi de commande de la tension de référence est identique à la loi de commande du courant de référence représentée à la figure 4, où il suffit de remplacer $I_M$ ou $-I_M$ par $\pm E_{GM}$ où $E_{GM}$ est tel que :
$I_M = \alpha x E_{GM}$.

## LOI DU MOUVEMENT DU SYSTEME MOBILE CORRESPONDANT A LA LOI DU COURANT.

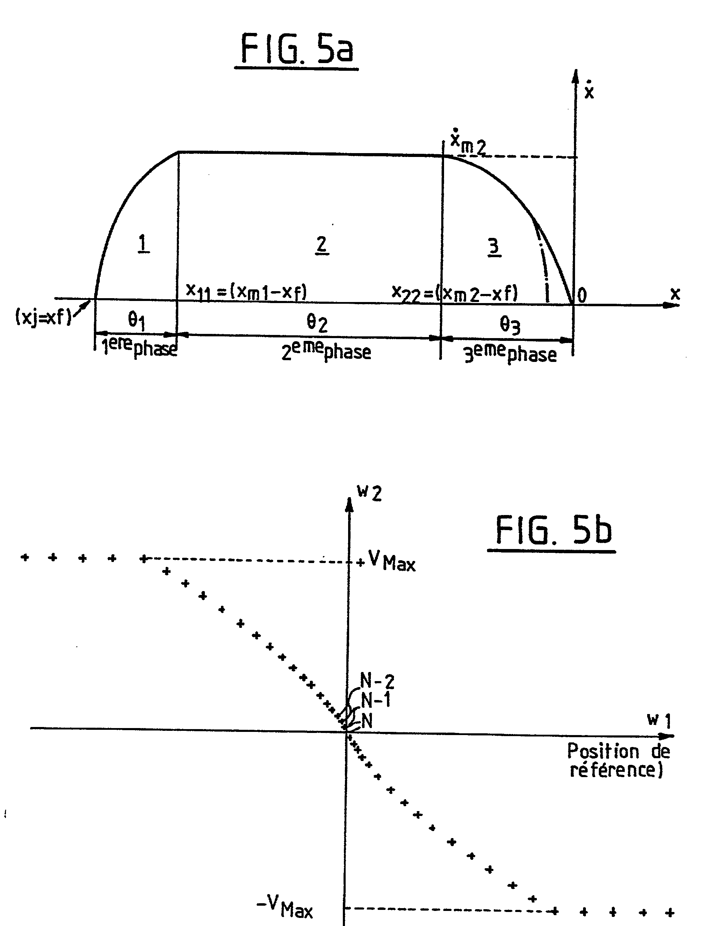

En fonction de la loi de commande du courant représentée à la figure 4, le mouvement du système mobile SYSMOB présente l'évolution suivante représentée à la figure 5a dans le plan de phase donnant la vitesse $\dot{X}$ en fonction de la position x( avec $x = x_m - x_f$).

Pendant la première phase du mouvement, entre les instants $t_0(k=0)$ et $\theta_1$, la vitesse $\dot{X}$ évolue en fonction de la position x suivant une courbe parabolique, jusqu'à ce que la tête TEL1 atteigne une position x11 - (xm1-xf). Durant cette première phase, l'accélération du système mobile est constante.

Pendant la deuxième phase, entre les instants $\theta_1$ et $\theta_2$, le mobile se déplace à vitesse sensiblement constante (en fait, la perte de vitesse due aux frottements est estimée négligeable) entre les positions x11 et x22 (= xm2-xf).

Durant la troisième phase, la vitesse décroît , de manière sensiblement parabolique entre la position x22 et la position x = 0. Cette phase est la phase de décélération.

Dans un exemple préféré de réalisation de l'invention, le dispositif de déplacement du système mobile fonctionne en boucle ouverte pendant les deux premières phases et est asservi pendant la phase de décélération.

On montre que, pour réduire l'énergie dépensée par le dispositif de déplacement du système mobile, lors du parcours entre les pistes A et B, (xm1-xf) doit être égal à 0,825 (xd - xf), où xd est la position de la piste de départ A.

Les différentes phases du mouvement sont alors commandées par une unité de commande UC connectée respectivement aux moyens MCAL, à la mémoire MODREF, au soustracteur DIF, qui opère de la manière suivante.

Cette unité de commande est reliée à la tête TEL1, par l'intermédiaire d'un circuit de mise en forme et reçoit une impulsion à chaque instant kT. A l'instant $t_0$, c'est-à-dire lorsque k = 0, la position x(k) est égale à $x_d - x_f$. L'unité de commande UC donne alors l'ordre à la mémoire MODREF de fournir au correcteur COR une tension $e_k$ de référence égale à $E_{GM}$. L'unité de commande interdit alors aux moyens MCAL de fournir une tension de correction $e_1(k)$ puisque le dispositif de déplacement ne doit pas être asservi pendant les deux premières phases. A cet effet, un interrupteur $I_1$ est disposé à l'intérieur des moyens MCAL afin d'inhiber le fonctionnement de ceux-ci pendant les deux premières phases. L'interrupteur $I_1$ est donc ouvert jusqu'à l'instant $\theta_2$.

A partir du moment où le dispositif de déplacement se met en mouvement, l'unité de commande UC qui contient la valeur de $x_f$ envoie celle-ci au soustracteur DIF qui calcule la quantité x(k). Cette dernière est comparée en valeur absolue par l'unité de commande à 0,825 x $(x_d-x_f)$. Lorsque x(k) est égale à cette dernière quantité, l'unité de commande donne alors l'ordre à la mémoire MODREF d'annuler la tension de commande de référence. Le courant d'alimentation dans la bobine du moteur est alors nul. On entre dans la deuxième phase du mouvement jusqu'à ce que l'unité de commande donne l'ordre de passer en phase de décélération, lorsque l'on a atteint le point ayant la position x22. La manière dont on passe à la phase de décélération en détectant la position x22 et la vitesse correspondante $\dot{x}22$ sera indiquée plus loin en relation avec la description de la manière dont on calcule le vecteur de référence $\underline{W}(k)$ en référence à la description des figu-res 7a et 7b. A partir de l'instant $\theta_2$, l'unité de commande UC donne l'ordre à la mémoire de référence MODREF de fournir au correcteur COR une tension de commande de référence :
$e(k) = -E_{GM}$
entre les instants $\theta_2$ et $\theta_3$ puis décroissant linéairement jusqu'à l'instant $T_x$ où la tension de commande de référence devient nulle.

Durant la troisième phase du mouvement, à partir de l'instant $\theta_2$, le dispositif de déplacement du système mobile selon l'invention fonctionne en boucle fermée, c'est-à-dire est asservi et l'unité de commande UC ferme l'interrupteur $I_1$ de telle manière que la tension de commande u(k) fournie au générateur de courant ALIM soit égale à e(k)-e1(k).

La troisième phase, qui est la phase finale du mouvement du système mobile, est la plus délicate car elle doit amener la tête TEL1 en regard de la piste d'arrivée B, en suivant la loi de commande représentée à la figure 4 et de telle façon que lorsque la tête se trouve en regard de la piste B, l'on ait x(k) = 0, $\dot{x}(k) = 0$, u(k)=0.

Pour être certain que les conditions finales énoncées ci-dessus soient satisfaites, le modèle de référence, c'est-à-dire l'ensemble des vecteurs $\underline{W}(k)$ pour chaque valeur de k, est calculé en remontant le temps à partir de l'instant final, c'est-à-dire l'instant où la tête TEL1 est située en regard de la piste d'arrivée B.

Le calcul du modèle de référence est effectué en temps différé, par exemple sur ordinateur et toutes les valeurs de $\underline{W}(k)$ pour chaque valeur de k sont enregistrées dans une table mémoire de la mémoire MODREF, à savoir la table TABVER. Par ailleurs, l'ensemble des valeurs e(k) donnant la tension de commande de référence pour chaque valeur de k est contenue dans une table TABLCR, appartenant également à MODREF. Les tables TABLCR et TABVER sont reliées chacune à l'unité de commande U.C par les liaisons L1 et L2. Pendant les 3 phases du mouvement, l'unité de commande donne l'ordre à la table TABLCR de transmettre les valeurs de e (k) au correcteur COR, grâce à la liaison L1.

On a vu plus haut que le mouvement du système mobile était régi par l'équation d'état (14).

## CALCUL DU VECTEUR D'ETAT DE REFERENCE.

Le modèle de référence qui est choisi doit être régi par une équation d'état analogue à celle du mouvement réel du système mobile, de façon que l'action de correction du correcteur COR soit la plus faible possible, c'est-à-dire que le terme $e_1(k)$ soit le plus faible possible. En d'autres termes, le modèle de référence choisi doit être le plus proche possible de l'évolution naturelle du système mobile SYSMOB.

Ce modèle de référence est donc tel que :

$$\underline{W}(k+1) = \oint . \underline{W}(k) + \ominus e(k) \qquad (17)$$

Les matrices

$$\oint \quad et \quad \ominus$$

sont identiques aux matrices indiquées ci-dessus aux équations (10bis) et 10ter).

On connait la loi donnant l'évolution de e(k) pour chaque valeur de k. C'est la loi qui est donnée à la figure 4.

Pour calculer chacun des vecteurs $\underline{W}(k)$ on part du vecteur d'état final $\underline{W}(N)$ correspondant à la piste d'arrivée B.

On doit avoir

$$\underline{W}(N) = 0 \quad et \quad e(N) = 0$$

$$\underline{W}(N) = \oint \underline{W}(N-1) + \ominus e(N-1)$$

$$d'où \quad \underline{W}(N-1) = \oint^{-1} . \underline{W}(N) - \oint^{-1} . \ominus . e(N-1),$$

$$\oint^{-1} \text{ étant la matrice inverse de } \oint .$$

Connaissant $\underline{W}(N) = 0$ et e(N-I) satisfaisant la loi de commande de la figure 4 on déduit W(N-I). En répétant le calcul de manière identique, on a :

$$\underline{W}(N-i) = \oint^{-1} . \left[ \underline{W}(N-i+1) - \ominus e(N-i) \right]$$

L'évolution dans le plan de phase du modèle de référence, (lequel est discret puisque composé d'une suite de valeurs discrètes pour chaque valeur de k), c'est-à-dire la courbe donnant la variation de la vitesse de référence $w_2$ en fonction de la position de référence $w_1$ est montrée à la figure 5b. Les valuers de $w_1$ sont positives ou négatives, le modèle de référence étant symétrique par rapport à l'origine. On ne mémorise donc dans la table TABVER que la moitié du modèle de référence, la seconde moitié se déduisant de la première par symétrie. On voit que ce modèle de référence est formé d'une suite de points discrets et que la valeur de $w_2$ est comprise entre une valeur $V_{Max}$ et une valeur $-V_{Max}$, la courbe reliant ces différents points passant par l'origine avec un point d'inflexion en celle-ci.

Le modèle de référence est donc constitué par une table de N vecteurs $\underline{W}(n)$ et leur tension de commande $e(n)$ associées, cette table contenant autant de vecteurs de référence que nécessaire pour atteindre une vitesse $\dot{x}$ maximum égale à $V_{max}$ qui correspond à la vitesse atteinte pour le parcours entre les pistes A et B le plus long possible. Cette table est indicée de $n = 0$ à l'origine (avec $x = 0$ et $\dot{x} = 0$) jusqu'à $n = N_1$ où $N_1$ est le nombre minimum d'échantillons, c'est-à-dire de valeurs discrètes calculées en temps inverse (c'est-à-dire en remontant le temps à partir de l'origine qui correspond au point d'arrivée) nécessaires pour atteindre la vitesse $V_{Max}$. Si la table de vecteurs $\underline{W}$ (n) qui est mémorisée dans la table TABVER est donnée pour les valeurs de $w_1$ (n) négatives, (ce qui correspond à $x_d < x_m < x_f$, c'est-à-dire lorsque l'on se déplace vers une piste d'arrivée B dont le numéro d'ordre est supérieur au numéro d'ordre de la piste de départ A), on obtient la table correspondant aux valeurs de x positives par symétrie de la première. Ceci est illustré par la figure 5b qui montre l'ensemble des points représentatifs des vecteurs $\underline{W}(k)$, pour les valeurs de $w_1$ positives ou négatives.

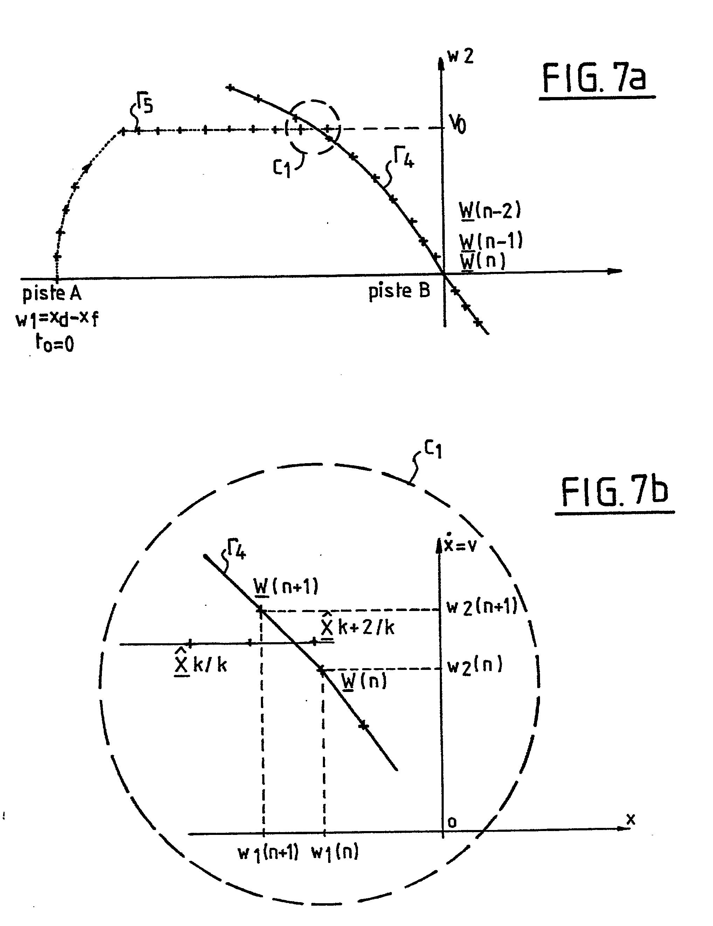

On considère la figure 6 où les figures 6a, 6b, 6c représentent respectivement l'évolution de la tension de commande de référence, et par conséquent du courant de commande de référence correspondant, la figure 6b l'évolution de la vitesse de référence $w_2$ (k) en fonction du temps et la figure 6c l'évolution de la position de référence $w_1(k)$ en fonction du temps.

La courbe $\Gamma_1$ qui représente l'évolution de la tension de commande de référence, et donc du courant de référence puisque $\alpha e(k) = i(k)$, varie donc entre une valeur minimum ($-I_M = -\alpha E_{GM}$) et une valeur nulle en décroissant linéairement de cette valeur minimum à cette valeur nulle à partir de l'instant $\theta_3$. Il est clair que la courbe $\Gamma_1$ de la figure 6a est identique à ce qui a été représenté à la figure 4.

La courbe $\Gamma_2$ qui représente l'évolution de la vitesse de référence en fonction du temps t est une courbe décroissante passant par l'origine et qui tangente l'axe des temps au voisinage de celle-ci.

La courbe $\Gamma_3$ qui représente l'évolution de la position de référence en fonction du temps t est une courbe croissant depuis des valeurs fortement négatives jusqu'à la valeur nulle correspondant à l'origine. La courbe $\Gamma_3$ tangente l'axe des temps au voisinage de cette dernière.

Ainsi qu'il a été dit plus haut, le mouvement du système mobile n'est asservi que pendant la phase de décélération à partir de l'instant $\theta_2$. Pour cette raison le modèle de référence n'a été représenté aux figures 6a, 6b et 6c que pour cette dernière phase, les valeurs des vecteurs $\underline{W}$ (n) n'étant données par la table TABVER que pour cette dernière phase.

A la figure 6 on a fait figurer les valeurs de la vitesse de référence et de la position de référence calculées pour deux valeurs différentes de l'instant $\theta_2$, à savoir la valeur $\theta_2$ proprement dite et la valeur $\theta'_2$, auxquelles correspondent les valeurs $V_0$ et $V'_0$ de la vitesse de référence et x22 et x'22 de la position de référence.

## PASSAGE EN PHASE DE DECELERATION.

Les figures 7a et 7b permettent de mieux comprendre comment on détecte le passage à la phase de décélération c'est-à-dire comment on détermine la vitesse et la position du système mobile SYSMOB correspondant à l'instant $\theta_2$.

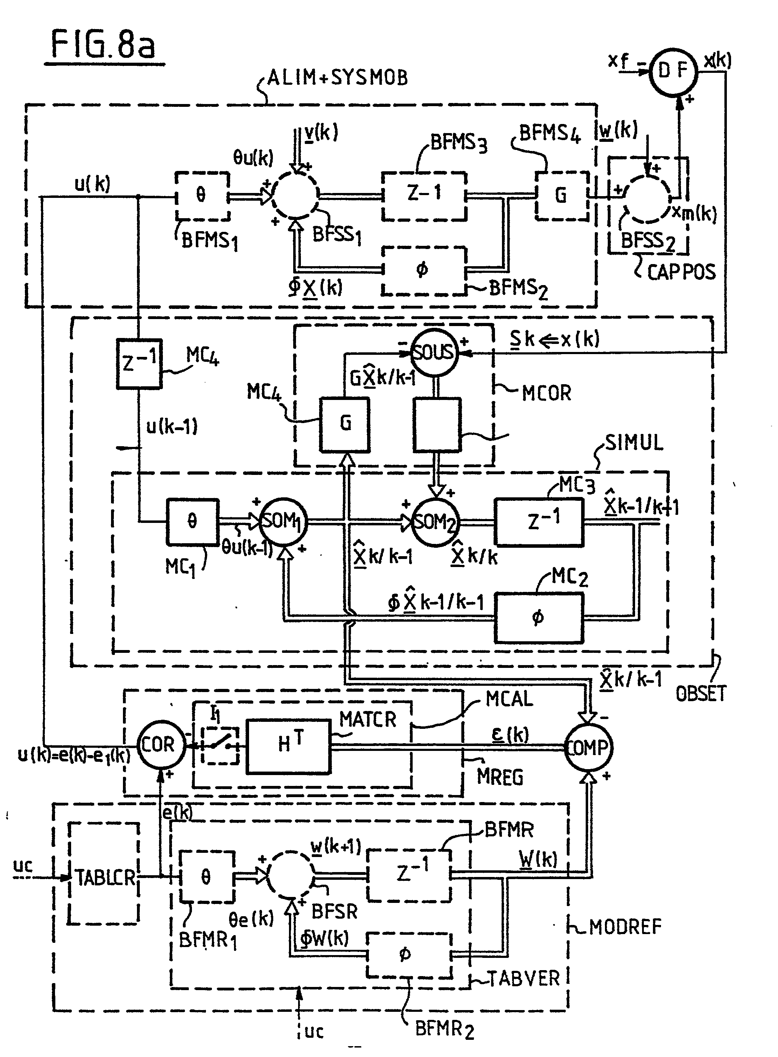

On considère donc la figure 7a. On a représenté sur cette même figure la courbe $\Gamma_5$ qui joint les différents points représentant dans le plan de phase la vitesse et la position estimées de la tête $TEL_1$, c'est-à-dire, les deux composantes du vecteur $\underline{\hat{X}}$ k/k, calculées par l'observateur d'état OBSET, (de la manière qui est indiquée plus loin en relation avec la description détaillée de l'observateur OBSET, en référence à la figure 8a) pour chaque instant kT entre l'instant $t_0=0$ où la tête $TEL_1$ est en regard de la piste A et l'instant où elle arrive en regard de la piste d'arrivée B. Cette courbe $\Gamma_5$ est bien entendu identique à la courbe représentée à la figure 5.

Cette courbe $\Gamma_5$ coupe la ligne brisée $\Gamma_4$ joignant tous les points du modèle de référence dans ce même plan de phase, à l'intérieur du cercle $C_1$.

Ce cercle $C_1$ est représenté de manière agrandie à la figure 7b.

Supposons que le système mobile ait atteint sa vitesse de plateau $V_0$. Puisque l'on connaît le vecteur d'état calculé du système mobile à savoir $\underline{\hat{X}}$ k/k, on peut prédire la valeur que le vecteur d'état atteindra, à savoir $\underline{\hat{X}}$ k+m/k sans que l'on change la commande (c'est-à-dire $i_{(k)}$ restant nul) à l'instant $t = kT+mT$, où m est un nombre entier supérieur à 1. Cette prédiction est accomplie par l'observateur d'état OBSET. Elle permet de détecter le passage en phase de décélération suffisamment tôt et ainsi de suivre avec une meilleure précision, le modèle de référence. On a trouvé, après simulations sur calculateur, que la valeur m = 2 était suffisante pour détecter le changement de phase avec précision.

On a donc :

$$\hat{\underline{X}}\,k+2/k \;=\; \underline{\phi}1 \;.\; \underline{X}\,k/k \;+\; \underline{\theta}1.\,u(k) \qquad (18)$$

$$\text{avec}\quad \underline{\phi}1 = \begin{bmatrix} 1 & 2T \\ 0 & 1 \end{bmatrix}\quad \text{et}\;\; \underline{\theta}1 = \begin{bmatrix} 2\,C_m T^2 \\ 2\,C_m T \end{bmatrix} \qquad (19)$$

$$\underline{\phi}1 \;\;\text{et}\;\; \underline{\theta}\,1$$

s'obtiennent en faisant $T = 2T$ dans

$$\underline{\phi}\;\text{et}\;\underline{\theta}\;,$$

les matrices obtenues aux équations (10bis) et (10ter).

En revenant à la figure 7b, si les points représentatifs des vecteurs $\underline{X}\,k+2/k.$ et $\underline{X}\,k/k$ sont situés de part et d'autre de la courbe $\Gamma_4$, le système SYSMOB passe en phase de décélération. Ce passage est commandé par l'unité de commande UC. Pour cela l'unité de commande UC reçoit donc, le vecteur d'état prédit $\hat{\underline{X}}k+2/k$ et le vecteur d'état de référence $\underline{W}(k)$ et effectue leur comparaison.

Lorsque $n$ est l'indice du vecteur de référence dans la table TABVER, la comparaison effectuée par l'unité de commande permet de vérifier :

$$\text{Alors, si}\quad \begin{vmatrix} W_1(n) \\ W_2(n) \end{vmatrix} \;\leq\; \begin{vmatrix} \hat{x}_1 k+2/k \\ \hat{x}_2\,k+2/k \end{vmatrix} \;\leq\; \begin{vmatrix} W_1\,(n+1) \end{vmatrix}$$

les points $\underline{X}\,k+2/k$ et $\underline{X}\,k/k$ sont considérés de part et d'autre de $\Gamma_4$.

On peut passer alors en phase de décélération. L'unité de commande UC ferme alors l'interrupteur $I_1$ et donne l'ordre à la table TABVER de fournir les vecteurs $\underline{W}(k)$ au comparateur COMP, grâce à la liaison L2.

On considère la figure 8a qui représente plus en détail certains des éléments représentés à la figure 3, à savoir la table TABVER, le système mobile SYSMOB, l'observateur d'état OBSET et les moyens de calcul MCAL.

On comprendra mieux comment est constitué et comment fonctionne l'observateur d'état OBSET, en décrivant au préalable le schéma fonctionnel équivalent à la table TABVER et celui du système mobile SYSMOB associé au générateur de courant ALIM. On apercevra mieux ainsi les analogies entre la structure de l'observateur d'état et les schémas fonctionnels de TABVER et SYSMOB.

Sur cette même figure 8a, la table TABVER qui mémorise les vecteurs de référence $\underline{W}(k)$ a été représentée par son schéma fonctionnel équivalent qui représente l'équation (17), sous forme d'un ensemble de blocs fonctionnels.

De même, l'ensemble constitué par le générateur de courant ALIM et le système mobile SYSMOB a été représenté à la figure 8a par son schéma fonctionnel équivalent qui représente sous forme d'un ensemble de blocs fonctionnels. Les équations (14) et (14bis).

## REPRESENTATION DE TABVER et ALIM+SYSMOB SOUS FORME DE SCHEMA FONCTIONNEL EQUIVALENT.

Ainsi, la table TABVER est équivalente à l'ensemble des blocs fonctionnels suivants :
- le bloc fonctionnel matriciel BFMR$_1$ qui est la matrice colonne de l'équation (10ter),
- le bloc fonctionnel matriciel BFMR$_2$ qui est la matrice carrée de l'équation (10bis),
- le bloc fonctionnel sommateur BFSR$_1$,
- le bloc fonctionnel BFMR$_3$, représentant un retard d'échantillonnage d'une période T, symbolisé par Z-1

Le schéma fonctionnel équivalent au générateur ALIM et au système mobile SYSMOB comprend les blocs fonctionnels suivants :
- le bloc fonctionnel matriciel BFMS$_1$ qui est une matrice colonne de l'équation (10ter), et par conséquent, analogue au bloc fonctionnel BFMR$_1$,
- le bloc fonctionnel matriciel BFMS$_2$ qui est la matrice carrée de l'équation (10bis) et par conséquent analogue au bloc fonctionnel BFMR$_2$,
- le bloc fonctionnel sommateur BFSS$_1$,
- le bloc fonctionnel BFMS$_3$, représentant un retard d'échantillonnage d'une période T symbolisé par Z-1
- le bloc fonctionnel matriciel BFMS$_4$ qui est la matrice de l'équation (14ter),
- le bloc fonctionnel sommateur BFSS$_2$.

Les blocs fonctionnels qui composent les deux schémas fonctionnels équivalents dans la table TABVER d'une part, et de l'ensemble ALIM - SYSMOB - CAPPOS d'autre part, sont représentés en traits interrompus à la figure 8, pour bien montrer qu'il s'agit d'un mode de représentation symbolique, sans que cela corresponde à des éléments physiques concrets, tels que des réseaux de calcul ou des circuits logiques.

Le bloc fonctionnel BFMR$_1$ reçoit la tension de commande e(k) et calcule la quantité e(k) qui est envoyée au bloc fonctionnel sommateur BFSR$_1$ qui reçoit également la quantité $\underline{W}$(k) calculée par le bloc fonctionnel BFMR$_2$ , celui-ci recevant le vecteur $\underline{W}$(k).

Le bloc fonctionnel sommateur BFSR$_1$ effectue donc la somme suivante :

$$\underline{\Theta}\, e(k) + \underline{\varphi}\, \underline{W}(k) = \underline{W}\,(k+1)$$

A la sortie du schéma fonctionnel équivalent à la table TABVER, c'est-à-dire à la sortie du bloc fonctionnel BFMR3 on recueille donc le vecteur $\underline{W}$(k).

De même, si l'on considère le schéma fonctionnel équivalent au générateur ALIM -SYSMOB - CAPPOS, on voit que le bloc fonctionnel BFMS$_1$ qui reçoit la tension de commande u(k) calcule la quantité $\underline{\theta}$u(k) qui est envoyée au bloc fonctionnel sommateur BFSS$_1$ lequel reçoit également la quantité

$$\underline{\varphi}.\,\underline{X}(k)$$

calculée par le bloc fonctionnel BFMS$_2$ qui reçoit le vecteur $\underline{X}$(k).

Le bloc fonctionnel BFMS$_4$ reçoit le vecteur $\underline{X}$(k) et envoie la quantité G$\underline{X}$(k) au bloc fonctionnel sommateur BFSS$_2$ .

L'ensemble constitué par le générateur ALIM, le système mobile SYSMOB, le capteur de position CAPPOS n'est pas parfait :
- en effet, les mesures effectuées par le capteur de position CAPPOS sont entachées d'erreurs (on a vu plus haut que la précision de détermination de la position de la tête TEL$_1$ au-dessus de la face du disque qui lui est associé est égale à une demi piste, il y a des erreurs dans la tension de commande et par conséquent dans le courant de commande),
- le système mobile est imparfait : les frottements sont variables (ce qui est du essentiellement à la rugosité du roulement du chariot CHAR sur les rails de guidage), il y a légère variation des paramètres définissant le système mobile en fonction de la position de celui-ci, dispersion de fabrication entraînant une dispersion des caractéristiques, variation de l'inductance de la bobine.

Ces imperfections peuvent être assimilées à des bruits :
- bruits dits de processus sur le vecteur d'état $\underline{X}_k$ à savoir : $\underline{v}$(k),
- bruits dits de mesure sur la variable G$\underline{X}$(k) à savoir : $\underline{w}$(k).

Le quantités $\underline{v}$(k) et $\underline{w}$(k) sont des vecteurs.

Les équations (14) et (14bis) deviennent alors :

$$\underline{X}(k+1) = \phi \underline{X}(k) + \theta u(k) + \underline{v}(k) \qquad (20)$$

$$\underline{S}(k) = G\underline{X}(k) + \underline{w}(k) \qquad (21)$$

$$\text{avec} \quad \underline{S}(k) = \begin{bmatrix} x(k) \\ \\ 0 \end{bmatrix}$$

Du point de vue fonctionnel tout se passe comme si le vecteur $\underline{v}(k)$ est envoyé au bloc fonctionnel sommateur BFSS$_1$ et le vecteur $\underline{w}(k)$ est envoyé au bloc fonctionnel sommateur BFSS$_2$.

Le bloc fonctionnel sommateur BFSS$_1$ effectue donc la somme

$$\phi X(k) + \theta u(k) + v(k)$$

et calcule donc le vecteur $X(k+l)$.

A la sortie du bloc fonctionnel BFMS$_3$ on obtient le vecteur $X(k)$ envoyé sur l'entrée du bloc fonctionnel BFMS$_4$ dont la sortie $GX(k)$ est envoyée au sommateur BFSS$_2$ qui calcule donc $x_{m(k)}$.

## STRUCTURE DETAILLEE DE L'OBSERVATEUR D'ETAT OBSET.

L'observateur OBSET est un filtre dit de KALMAN qui effectue une prédiction $\hat{X}_{k/k-l}$ du vecteur d'état $X_k$ à partir du vecteur d'état $\hat{X}_{k-l/k-l}$. $\hat{X}_{k-l/k-l}$, est par définition une estimation du vecteur d'état $X$ à l'instant $(k-l)T$. (De même, $\hat{X}_{k/k}$ est une estimation du vecteur d'état $X$ à l'instant $kT$, à partir des mesures effectuées à ce même instant). Elle est calculée à partir des mesures effectuées à l'instant $(k-l)T$, c'est-à-dire à partir de la connaissance de la tension de commande $u(k-l)$ et de la position $x_m(k-l)$. On voit donc que le vecteur d'état prédit $\hat{X}_{k/k-l}$ ne tient compte que des mesures effectuées à l'instant $(k-l)T$. L'observateur d'état OBSET calcule d'abord $\hat{X}_{k-l/k-l}$ à partir de $u(k-l)$ et $x(k-l)$ puis calcule $\hat{X}_{k/k-l}$ à partir de $\hat{X}_{k-l/k-l}$.

Le filtre de KALMAN OBSET comprend :

- un simulateur SIMUL qui simule le mouvement du système mobile SYSMOB entre la piste de départ A et la piste d'arrivée B et effectue le calcul du vecteur d'état prédit $\hat{X}_{k/k-l}$ et envoie ce vecteur d'état prédit au comparateur COMP,

- des moyens de correction MCOR recevant le vecteur d'état prédit $\hat{X}_{k/k-l}$ et la position $x(k)$ et calculant un terme de correction renvoyé au simulateur pour modifier la valeur du vecteur d'état prédit calculée par le simulateur SIMUL.

La manière dont sont déterminés et calculés des différents éléments constituant le simulateur SIMUL et les moyens de correction MCOR est exposée en détail dans les deux documents suivant :

- "Commande et régulation par calculateur numérique" de Foulard, Cendraz et Gentil, Editions Eyrolles, 1978

- "Le filtrage et ses applications" de M.Labarere, J.P Krief, B.J. Monet, Lepadues, Editions, 1978 Nous nous limiterons donc à en rappeler les grandes lignes.

La détermination du filtre de KALMAN suppose que les caractéristiques statistiques des bruits $\underline{v}(k)$ et $\underline{w}(k)$ soient connues, on suppose qu'ils sont gaussiens à moyenne nulle et donc que les matrices de covariance définies ci-dessous sont telles que:

$$E\left\{\underline{v}(k).\underline{v}^T(k)\right\} = Q \qquad (22)$$

$$E\left\{\underline{w}(k).\underline{w}^T(k)\right\} = R \qquad (23)$$

On suppose que les bruits ne sont pas corrélés, ce qui signifie que $\underline{v}(k)$ n'est pas dépendant de $\underline{w}(k)$ et réciproquement, c'est-à-dire que l'on a :

$$E\left\{\underline{v}(k).\underline{w}^T(k)\right\} = 0 \qquad (24)$$

$$E\left\{\underline{w}(k).\underline{v}^T(k)\right\} = 0 \qquad (25)$$

On rappelle qu'une expression du type E

$$\left\{\underline{v}(k).\underline{v}^T(k)\right\}$$

est appelée matrice d'espérance mathématique ou matrice de covariance et que si $\underline{v}(k)$ est un vecteur de composantes $v_1$, $v_2$, c'est-à-dire que:

$$\underline{v}(k) = \begin{bmatrix} v_1 \\ v_2 \end{bmatrix}$$

$$\text{avec} \qquad v^T(k) = \begin{bmatrix} v_1, & v_2 \end{bmatrix}$$

$$E\left\{v(k), v^T(k)\right\} = E\left\{\begin{bmatrix} v_1 \\ v_2 \end{bmatrix} \cdot \begin{bmatrix} v_1, v_2 \end{bmatrix}\right\} = E\left\{\begin{bmatrix} v_1^2 & v_1 v_2 \\ v_1 v_2 & v_2^2 \end{bmatrix}\right\}$$

La manière dont sont calculées les matrices Q et R sera exposée plus loin.

La détermination du filtre de KALMAN se fait donc dans un contexte stochastique. On montre dans les deux documents énoncés ci-dessus que si les bruits sont gaussiens le filtre de KALMAN est optimal, c'est-à-dire que de tous les observateurs d'état, c'est celui dont la variance d'observation est la plus faible.

Si $\hat{\underline{X}}_{k+l/k}$ est la prédiction du vecteur d'état $\underline{X}$ à l'instant $(k+l)T$ à partir d'observations effectuées à l'instant kT, an $\hat{\underline{X}}_{k/k}$ ayant été défini ci-dessus, on montre dans les deux documents indiqués ci-dessus concernant le filtre de KALMAN, que celui-ci satisfait aux équations suivantes (26) à (32), la série d'équations (26) à (29) étant appelées équations de filtrage et la série des équations (30) à (32) étant appelée équations de prédiction, les équations de filtrage étant appelées également équations d'estimation.

Les équations de filtrage (d'estimation) sont :

$$\hat{\underline{X}}_{k/k} = \hat{\underline{X}}_{k/k-1} + K_k \left[ \underline{S}_k - G \cdot \hat{\underline{X}}_{k/k-1} \right] \quad (26)$$

avec
$$K_k = C_{k/k-1} \cdot G^T \cdot D_k^{-1} \quad (27)$$

$$D_k = G \cdot C_{k/k-1} \cdot G^T + R \quad (28)$$

$$C_{k/k} = C_{k/k-1} - K_k \cdot D_k^T \cdot K_k^T \quad (29)$$

Les équations de prédiction sont :

$$\hat{\underline{X}}_{k+1/k} = \Phi \cdot \hat{\underline{X}}_{k/k} + \underline{\theta} u_k \quad (30)$$

$$\hat{\underline{S}}_{k+1/k} = G \cdot \hat{\underline{X}}_{k+1/k} \quad (31)$$

$$C_{k+1/k} = \Phi \cdot C_{k/k} \cdot \Phi^T + Q \quad (32)$$

où $C_{k/k}$ est la matrice de covariance de l'erreur d'observation :

$$C_{k/k} = E \left\{ (\underline{X}_k - \hat{\underline{X}}_{k/k}) \cdot (\underline{X}_k - \hat{\underline{X}}_{k/k})^T \right\}$$

et $C_{k+1/k}$ est la matrice de covariance de l'erreur de l'état prédit, avec :

$$C_{k+1/k} = E \left\{ (\underline{X}_{k+1} - \hat{\underline{X}}_{k+1/k}) \cdot (\underline{X}_{k+1} - \hat{\underline{X}}_{k+1/k})^T \right\}$$

Le terme $K_k$ s'appelle matrice de gain de correction de KALMAN. Elle se calcule de manière itérative à l'aide des formules (26) à (32) à partir du moment où l'on connait les matrices de covariance Q et R et où on connait le terme $C_{k/k} = C_{0/0}$.

La manière dont on calcule les matrices de covariance Q et R ainsi que le terme $C_{0/0}$ est indiquée ci-dessous.

La matrice de covariance Q se calcule de la manière suivante.

De l'équation (10ter) on tire

$$\underline{\theta} = \begin{bmatrix} T^2 \\ T \end{bmatrix} \times \alpha \frac{K_0}{M}$$

On pose $C = \alpha.k_0/M$.

T est connu avec une très bonne précision relative (de l'ordre de 0,01%). Les tolérances de fabrication des différents éléments constituant le système mobile SYSMOB sont telles que le terme C est dispersé autour d'une valeur moyenne $C_m$.

18

Le nombre de paramètres intervenant sur C est grand (plusieurs résistances pour $\alpha$ ; $k_0$ dépendant des dimensions du moteur ML, de la qualité des aimants AM, de la position de la bobine BOB ; le système mobile est constitué d'un grand nombre de pièces). On peut alors admettre que la distribution de C est une loi de Gauss normale centrée sur la valeur moyenne $C_m$ et ayant un écart type $\delta$.

On veut que 99,5% de l'ensemble des machines, qu'on appelle "population des machines", ait un coefficient C dont les valeurs sont comprises entre $0,8C_m$ et $1,2C_m$.

Du fait qu'une population de machines égale à 99,5% de l'ensemble des machines correspond à un écart type égal à $3\delta$ (ce qui est une caractéristique connue d'une loi de distribution de type gaussien), on peut donc écrire :

$$3\sigma \# \ 0,2C_m \ \text{ce qui donne} \quad \sigma = 0,2C_m/3$$

On impose donc lors de la fabrication du système mobile un écart type tel que :

$$\sigma \leq 0,2C_m/3 \ .$$

On pose $\underline{\theta} = \underline{\theta}_m + \underline{\Delta\theta}$ où $\underline{\theta}_m$ est la moyenne de $\underline{\boldsymbol{\theta}}$.

L'équation (14) devient alors :

$$\underline{X}(k+1) = \oint \underline{X}(k) + \underline{\theta}_m u(k) + \underline{\Delta\theta} \cdot u(k) \quad (33)$$

où $\underline{\Delta\theta} \cdot u(k)$ représente le bruit de processus $\underline{v}(k)$.

Ce bruit de processus $\underline{v}(k)$ dépend donc de la commande $u(k)$. On considère alors la valeur maximum que peut prendre cette dernière, soit $U_{max}$.

On a alors une valeur majorante du vecteur définissant le bruit de processus :

$$\underline{v}(k)_{max} = \underline{\Delta\theta} \cdot U_{max} \quad (34)$$

$$\text{d'où} \quad \underline{v}(k)_{max} = \begin{bmatrix} \dfrac{T^2}{2} \\ T \end{bmatrix} \Delta C. U_{max} \quad (35)$$

$$\text{avec} \quad \Delta C = 0,2.C_m$$

La matrice Q de covariance des bruits de processus est alors :

$$Q = E \left\{ \underline{v}_k \cdot \underline{v}_k{}^T \right\} = \begin{bmatrix} \dfrac{T^4}{4} & \dfrac{T^3}{2} \\ \\ \dfrac{T^3}{2} & T^2 \end{bmatrix} U_{max}{}^2 \cdot E \left\{ \Delta c^2 \right\}$$

mais $E \left\{ \Delta c^2 \right\} = \sigma^2$ par définition.

$$\text{d'où} \quad Q = \begin{bmatrix} \dfrac{T^4}{4} & \dfrac{T^3}{2} \\ \\ \\ \dfrac{T^3}{2} & T^2 \end{bmatrix} U^2{}_{max} \cdot \dfrac{0,04}{9} \cdot c^2{}_m \qquad (36)$$

Les termes $T$, $U_{max}$, $C_m$ étant connus, la matrice $Q$ est donc connue.

La matrice de covariance $R$ des bruits de mesure se calcule de la manière suivante. On part de l'équation (21) qu'on appelle équation d'observation.

Dans notre dispositif de déplacement selon l'invention, seule la position $x(k)$ est mesurée. Donc la composante non nulle du vecteur de bruit de mesure $\underline{w}(k)$ est un scalaire, soit $w(k)$, qui réprésente le bruit de mesure du à la quantification. Il a été écrit plus haut que la précision avec laquelle on détermine la position de la tête $TEL_1$, qu'on peut appeler pas de quantification $\Delta q$ est égale à la longueur d'une demi piste, soit $lp/2$. Ce bruit de mesure du à la quantification est à moyenne nulle et a une distribution statistique uniforme sur l'intervalle $(-\Delta q/2 + \Delta q/2)$. Selon la formule de Sheppard indiquée dans le document intitulé "Le filtrage et ses applications" précité, on montre que la variance du bruit de quantification $\delta^2$ est égale à $\Delta q^2/12$. Cette quantité peut être assimilée à la matrice de covariance $R$. Du fait que $\Delta q$ est connu, on voit que la matrice de covariance des bruits de mesure $R$ est également connue.

La matrice de covariance d'erreurs d'estimation à l'instant initial pour $kT=0$ est, par définition :

$$C_{0/0} = E \left\{ (\underline{X}_{0/0} - \underline{\hat{X}}_{0/0}) \cdot (\underline{X}_{0/0} - \underline{\hat{X}}_{0/0})^T \right\} \qquad (37)$$

Comme chaque mouvement du système mobile part d'un état initial où la position $x_d = x_{0/0}$ est connue avec une très bonne précision, et où la vitesse est nulle, le vecteur $(\underline{X}_{0/0} - \underline{\hat{X}}_{0/0})$ peut être considéré comme nul, donc l'on a :

$$C_{0/0} = \begin{bmatrix} 0 & 0 \\ \\ 0 & 0 \end{bmatrix} \qquad (38)$$

Connaissant les valeurs de Q, R et $C_{0/0}$, on peut calculer le gain de la matrice de correction de KALMAN $K_k$ la démarche exposée ci-dessous:

On prend k=0, alors

$$C_{k/k} = C_{0/0} = \begin{bmatrix} 0 & 0 \\ & \\ 0 & 0 \end{bmatrix}$$

d'où $C_{k+l/k} = C_{1/0} = Q$ (39)

On prend ensuite k = l l'équation donne alors :

$$c_{2/1} = \oint c_{1/1} \oint^T + Q$$

Or l'équation (29) donne :

$C_{1/1} = C_{1/0} - K_1 D_1^T K_1^T$

Mais d'aprèsl'équation (28) :

$D_1 = G\ C_{1/0}\ G^T + R = G\ Q\ G^T + R$

dont tous les éléments sont connus. $D_1$ est donc calculable ainsi que $D_1^T$ et $D_1^{-1}$.

Par ailleurs :

$K_1 = C_{1/0}\ G^T\ D_1\text{-}1$ dont tous les éléments sont désormais connus est calculable ainsi que $K_1^T$. En reportant les valeurs de $K_1$, $D_1^T$, $K_1^T$ et $C_{1/0}$ dans l'équation (29), on trouve $C_{1/1}$ et par suite $C_{2/1}$.

Le calcul peut se poursuivre de la même manière pour chaque valeur de k. On trouve que, pour k de l'ordre de 6 à 8, $K_k$ tend vers une matrice colonne limite constante K.

De même $C_{k/k}$ tend vers une matrice constante.

Dans l'observateur d'état OBSET de KALMAN montré à la figure 8a, on n'utilise en pratique parmi les équations (26) à (32) que les équations (26) et (30), puisque les matrices $K_k$ et $C_{k/k}$ sont des matrices constantes.

Ainsi qu'on le verra plus en détail ci-dessous, les différentes éléments constitutifs essentiels du simulateur SIMUL et des moyens de correction MCOR permettent de réaliser les équations (26) et (30).

Les différents éléments constitutifs essentiels de SIMUL sont :

- un réseau matriciel de calcul $MC_1$ donnant la matrice $\underline{\theta}$ ,
- un réseau matriciel de calcul $MC_2$ donnant la matrice

$$\oint \ ,$$

- un réseau matriciel de calcul $MC_3$ représentant un retard d'échantillonnage de période T,
- un élément de sommation $SOM_1$,
- un élément de sommation $SOM_2$.

Les moyens de correction MCOR comprennent :

- un réseau matriciel de calcul $MC_4$ donnant la matrice G,
- un réseau matriciel de calcul MKAL donnant la matrice de gain de correction de KALMAN de valeur constante K,
- un élément soustracteur $SOUS_1$.

Le mode de fonctionnement du simulateur SIMUL et des moyens de correction MCOR est le suivant.

Le réseau matriciel $MC_1$ reçoit la tension de commande u(k-l) et calcule la quantité u(k-l) qui est envoyée à l'élément sommateur SOM1. Celui-ci reçoit par ailleurs une quantité $\overset{\wedge}{X}_{k-l/k-l}$ envoyée par le réseau matriciel $MC_2$ qui reçoit le vecteur d'état $\overset{\wedge}{X}_{k-l/k-l}$.

L'élément sommateur SOM1 calcule donc le vecteur d'état prédit $\overset{\wedge}{X}_{k/k-l}$ qui est égal à :

$$\oint \overset{\wedge}{\underline{X}}_{k-1/k-1} + \underline{\theta}\ x\ u(k-1),$$

ce qui correspond à l'équation (30). Ce dernier vecteur d'état prédit calculé par l'élément sommateur SOM1 est envoyé à l'élément sommateur SOM2.

Par ailleurs ce même vecteur d'état prédit $\hat{X}_{k/k-1}$ est envoyé au réseau matriciel MC4 qui calcule la quantité $GX_{k/k-1}$ et l'envoie à l'élément soustracteur SOUS1 qui reçoit par ailleurs la position x(k) c'est-à-dire le vecteur $S_k$.

Cet élément soustracteur SOUS1 effectue le calcul de $S_k - G \hat{X}_{k/k-1}$, et envoie cette différence au réseau matriciel MKAL qui calcule donc l'expression :

$$K \left\{ S_k - G \hat{X}_{k/k-1} \right\}.$$

L'expression calculée par le réseau matriciel MKAL est envoyée à l'élément sommateur SOM2 à la sortie duquel on recueille le vecteur d'état estimé

$$\hat{X}_{k/k} = \hat{X}_{k/k-1} + K \times \left\{ S_k - GX_{k/k-1} \right\}.$$

On retrouve donc bien ici à la sortie de l'élément SOM3 l'équation (26) alors que à la sortie de l'élément du sommateur SOM2, on obtient le vecteur donné par l'équation (30).

A la sortie du réseau matriciel MC3, on recueille le vecteur estimé à l'instant d'échantillonnage précédent soit $\hat{X}_{k-l/k-1}$.

Au vu de ce qui est écrit ci-dessus, on voit bien que l'observateur d'état de KALMAN OBSET réalise les équations (26) et (30). Pour calculer $\hat{X}_{k+2/k}$ (en vue de la détection du passage en phase de décélération par l'unité de commande UC) l'observateur OBSET comprend un second simulateur SIMUL1 représenté à la figure 8b qui comprend :
- un réseau matriciel de calcul MCC1 donnant la matrice $\theta_1$ ;
- un réseau matriciel de calcul MCC2 donnant la matrice

$$\phi_1 \quad (\theta_1 \text{ et } \phi_1 \text{ voir equation (19) );}$$

- un élément sommateur SOM3 .

MCC1 reçoit u(k) et calcule $\theta_1 u(k)$ qu'il envoie à l'élément sommateur SOM3.
Ce dernier reçoit par ailleurs la quantité

$$\phi_1 \hat{X}_{k/k}$$

calculée par MCC2 qui reçoit la quantité $\hat{X}_{k/k}$ prélevée à la sortie de l'élément sommateur SOM2. $\hat{X}_{k+2/k}$ est envoyé à l'unité de commande UC.

## DESCRIPTION DES MOYENS DE CALCUL MCAL.

Les moyens de calcul sont constitués par une matrice de correction MATCR suivie en série de l'interrupteur $I_1$.

On détermine la matrice de correction MATCR de la manière suivante. La matrice MATCR est choisie en minimisant une fonction quadratique sur le vecteur d'erreurs $\varepsilon(k)$ et sur la commande $e_1(k)$, selon un calcul effectué dans le document "Commande et régulation par calculateur numérique" précité.
On cherche, selon ce même document, à minimiser l'expression suivante :

$$I_N = \sum_{k=1}^{k=N} \left\{ (\varepsilon_k^T M \varepsilon(k) + \lambda e_1^2(k) \right\} \quad (39)$$

où $\varepsilon$ représente le vecteur d'état d'erreur entre l'état du système et l'état du modèle de référence, soit :

$$\underline{\underline{\varepsilon}} = \underline{W} - \underline{X} \quad \text{où}$$

Les relations : $\underline{W}(k+1) = \oint \underline{W}(k) + \underline{\theta} . e(k) \quad (17)$

et $\underline{X}(k+1) = \oint \underline{X}(k) + \underline{\theta} . u(k) \quad (14)$

permettent d'écrire :

$$\underline{\underline{\varepsilon}}(k+1) = \oint \underline{\underline{\varepsilon}}(k) + \underline{\theta} . ( e(k) - u(k) ) \quad (40)$$

avec $e(k) - u(k) = e_1(k)$

$e_1(k)$ représente les actions de correction de la commande par rapport à la commande de référence.

Le choix d'un critère quadratique permet d'améliorer les performances du dispositif de déplacement du système mobile selon l'invention en minimisant l'erreur quadratique de suivi du modèle de référence et en minimisant les actions de correction de commande, c'est-à-dire le terme $e_1(k)$.

La valeur de la matrice MATCR, que l'on désigne par $H^T$ est calculée comme indiquée dans la référence rappelée ci-dessus, en minimisant le critère $I_N$, et en tenant compte de l'équation (40), la matrice M étant choisie symétrique et positive.

La matrice $H^T$ ainsi obtenue est une matrice ligne à coefficient négatif. Et l'on a :

$e_1(k) = H^T \underline{\varepsilon}(k) \quad (41)$

Comme $e_1(k) = e(k) - u(k)$

En remplaçant $e_1(k)$ par sa valeur, on obtient :

$u(k) = e(k) - H^T . \underline{\varepsilon}(k) \quad (42).$

## Revendications

Procédé pour déplacer un système mobile (SYSMOB) par rapport à un support d'informations (DISC) enregistrée sur une pluralité de pistes, le système étant mû par un moteur électrique (ML) alimenté en tension/courant par un générateur d'alimentation (ALIM) commandé par une tension de commande $u_{(k)}$ et comportant au moins une tête de lecture/écriture TEL$_1$ des informations déplacée sur une trajectoire donnée d'une piste de départ A et une piste d'arrivée B, la position $x_m(k)$ de la tête (TEL$_1$) sur la trajectoire étant mesurée à des instants d'échantillonnage déterminés, par un capteur de position (CAPPOS), la vitesse ($\dot{x}$) étant calculée, la position (x) et la vitesse étant comparées avec une position et une vitesse de référence ladite comparaison permettant de calculer ladite tension de commande, caractérisé en ce que:

1) on prédit pour chaque instant d'échantillonnage déterminé kT la valeur du vecteur $\hat{X}_{k/k-1}$ donnant la position et la vitesse de la tête ($\dot{x}$, x) à cet instant en fonction de sa position mesurée $x_m(k-1)$ et de la tension de commande $u_{(k-1)}$ considérées à l'instant d'échantillonnage précédent (k-1)T,

2) on compare le vecteur d'état prédit $\hat{X}_{k/k-1}$ à un vecteur d'état de référence $\underline{W}_{(k)}$ donnant la position et la vitesse de référence que doit avoir la tête (TEL$_1$) à l'instant d'échantillonnage déterminé kT,

3) on calcule ladite tension de commande $u_{(k)}$ en fonction d'une commande de référence $e_{(k)}$ du moteur à l'instant d'échantillonnage déterminé kT et de la différence $\underline{\varepsilon}_{(k)}$ entre le vecteur d'état estimé $\hat{X}_{k/k-1}$ et le vecteur d'état de référence $\underline{W}_{(k)}$.

2. Procédé selon la revendication 1, caractérisé en ce que la prédiction du vecteur d'état $\hat{X}_{k/k-1}$ tient compte des bruits de mesure $\underline{w}_{(k)}$ sur les variables observées comme la position ou l'erreur sur la tension de commande $u_{(k)}$ et des bruits de processus $\underline{v}_{(k)}$ sur le $\underline{X}_k$.

3. Procédé selon l'une des revendications 1 ou 2 caractérisé en ce que la tension de commande $u(k)$ est égale à la différence entre la tension de commande de référence $e_{(k)}$ et une quantité égale au produit de $\underline{\varepsilon}_{(k)}$ par une matrice de correction $H^T$.

4. Dispositif de mise en œuvre du procédé selon la revendication 1, comprenant:

– des moyens d'observation d'état (OBSET) pour prédire à chaque instant d'échantillonnage déterminé kT la valeur du vecteur d'état $\hat{X}_{k/k-1}$, recevant la valeur de la position $x_m(k-1)$ de la tête mesurée par le capteur de position (CAPPOS) à l'instant d'échantillonnage (k-1)T précédent, ainsi que la valeur de la tension de commande $u_{(k-1)}$ à ce même instant d'échantillonnage précédent,

– des moyens de mémorisation (MODREF) de la tension de référence e(k) et du vecteur d'état de référence $\underline{W}_{(k)}$ pour chaque instant d'échantillonnage kT,

– des moyens pour comparer (COMP) le vecteur d'état prédit $\hat{X}_{k/k-1}$ avec le vecteur d'état de référence $\underline{W}(k)$ et calculer leur différence $\underline{\varepsilon}_{(k)}$,

– des moyens de régulation (MREG) calculant la tension de commande u(k) en fonction de la tension de référence e(k) et de la différence $\underline{\varepsilon}_{(k)}$ entre le vecteur d'état prédit et le vecteur d'état de référence.

5. Dispositif selon la revendication 4, les moyens d'observation d'état (OBSET) étant constitués par un observateur d'état de KALMAN dont la matrice de KALMAN est constante.

6. Dispositif selon les revendications 4 ou 5, les moyens de régulation (MREG) étant constitués par:

– une matrice de calcul (MATCR) de valeur $H^T$ recevant la différence $\underline{\varepsilon}_{(k)}$ entre le vecteur d'état prédit et le vecteur d'état de référence et délivrant une tension de correction $e_1(k)$, par l'intermédiaire d'un interrupteur I1

– un correcteur (COR) recevant la tension de référence $e_{(k)}$ envoyée par les moyens de mémorisation de la tension de référence (MODREF), et qui effectue la différence entre $e_{(k)}$ et $e_1(k)$, où $e_1(k)$ est égal au produit de $H^T$ par $\underline{\varepsilon}_{(k)}$.

**Claims**

1. A method of displacing a system (SYSMOB) movable with respect to a data carrier (DISC) recorded on a plurality of tracks, the system being moved by an electric motor (ML) supplied with voltage/current by a supply generator (ALIM) controlled by a control voltage $u_{(k)}$ and comprising at least one read/write head TEL₁ for data displaced along a given path from a departure track A to an arrival track B, the position $x_m(k)$ of the head (TEL₁) on the path being measured at specific sampling instants by a position detector (CAPPOS), the speed $(\dot{x})$ being calculated, the position (x) and the speed being compared to a reference position and speed, the said comparison allowing the said control voltage to be calculated, characterised in that:

1) the value of the vector $\hat{X}_{k/k-1}$ giving the position and speed $(\dot{x}, x)$ of the head at this instant as a function of its measured position $x_m(k-1)$ and of the control voltage $u_{(k-1)}$ taken at the preceding sampling instant (k-1)T is predicted for each specific sampling instant kT,

2) the predicted state vector $\hat{X}_{k/k-1}$ is compared to a reference state vector $\underline{W}_k$ giving the reference position and speed that the head (TEL₁) should have at the specific sampling instant kT,

3) the said control voltage $u_{(k)}$ is calculated as a function of a motor reference control $e_{(k)}$ at the specific sampling instant kT and of the difference $\underline{\varepsilon}_{(k)}$ between the estimated state vector $\hat{X}_{k/k-1}$ and the reference state vector $\underline{w}_{(k)}$.

2. A method according to claim 1, characterised in that the prediction of the state vector $\hat{X}_{k/k-1}$ allows for measurement noise $\underline{w}(k)$ on the observed variables, such as the position or the error in the control voltage $u_{(k)}$ and of the process noise $\underline{v}_{(k)}$ on the vector $\underline{X}_k$.

3. A method according to one of the claims 1 or 2, characterised in that the control voltage u(k) is equal to the difference between the reference control voltage e(k) and a quantity equal to the product of $\underline{\varepsilon}_{(k)}$ by a correction matrix $H^T$.

4. Apparatus for carrying out the method according to claim 1, comprising:

– state observation means (OBSET) for predicting at any instant of specific sampling kT the value of the state vector $\hat{X}_{k/k-1}$, receiving the value of the head position $x_m(k-1)$ measured by the position detector (CAPPOS) at the preceding sampling instant (k–1)T, as well as the value of the control voltage $u_{(k-I)}$ at this same preceding sampling instant,

– means (MODREF ) for storing the reference voltage e(k) and the reference state vector $\underline{W}_{(k)}$ for each sampling instant kT,

– means (COMP) for comparing the predicted state vector $\hat{X}_{k/k-1}$ with the reference state vector $\underline{W}_{(k)}$ and calculating their difference $\underline{\varepsilon}_{(k)}$, regulation means (MREG) calculating the control voltage u(k) as a function of the reference voltage e(k) and of the difference $\underline{\varepsilon}_{(k)}$, between the predicted state vector and the reference state vector.

5. Apparatus according to claim 4, the state observation means (OBSET) being formed by a KALMAN state observer, the matrix of which is constant.

6. Apparatus according to claims 4 or 5, the regulation means (MREG) being formed by:

– a matrix (MATCR) for calculation of the value HT receiving the difference $\underline{\varepsilon}_{(k)}$ between the predicted state vector and the reference state vector and delivering a correction voltage $e_1(k)$ via a break switch I1,

– a corrector (COR) receiving the reference voltage $e_{(k)}$ transmitted by the means for storing the reference voltage (MODREF) and which establishes the difference between $e_{(k)T}$ and $e_1(k)$, where $e_1(k)$ is equal to the product of H by $\underline{\varepsilon}_{(k)}$.

**Patentansprüche**

1. Verfahren zum Verlagern einer gegenüber einem Träger von mehrspurig aufgezeichneten Daten (DISC) bewegbaren Anordnung (SYSMOB), wobei die Anordnung von einem elektrischen Motor (ML) bewegt wird, der von einem von einer Steuerspannung $u_{(k)}$ gesteuerten Stromgenerator (ALIM) mit Spannung/Strom gespeist wird, und für die Daten mindestens einen Schreib-Lese-Kopf $TEL_1$ umfaßt, der auf einer gegebenen Bahn von einer Ausgangsspur A zu einer Zielspur B bewegt wird, wobei die Stellung $x_m(k)$ des Kopfes ($TEL_1$) auf der Bahn zu vorgegebenen Abtastzeitpunkten von einem Stellungsgeber (CAPPOS) gemessen, die Geschwindigkeit ($\dot{x}$) berechnet wird, die Stellung (x) und die Geschwindigkeit mit einer Stellung und einer Bezugsgeschwindigkeit verglichen werden, wobei dieser Vergleich die Berechnung dieser Steuerspannung gestattet, dadurch gekennzeichnet, daß:

– 1. für jeden vorgegebenen Abtastzeitpunkt kT der Wert des Vektors $\hat{\underline{X}}_{k/k-1}$ vorhergesagt wird, der die Stellung und die Geschwindigkeit des Kopfes ($\dot{x}$, x) zu diesem Zeitpunkt in Abhängigkeit von seiner zum vorausgehenden Abtastzeitpunkt (k–1)T berücksichtigten gemessenen Stellung $x_m(k–1)$ und Steuerspannung $u_{(k–1)}$ gibt,

– 2. der vorhergesagte Zustandsvektor $\hat{X}_{k/k-1}$ mit einem Bezugszustandsvektor $\underline{W}_{(k)}$ verglichen wird, der die Stellung und Bezugsgeschwindigkeit gibt, die der Kopf ($TEL_1$) zum vorgegebenen Abtastzeitpunkt kT haben muß,

– 3. diese Steuerspannung $u_{(k)}$ abhängig von einer Bezugssteuerspannung $e_{(k)}$ des Motors zum vorgegebenen Abtastzeitpunkt kT und von der Differenz $\underline{\varepsilon}_{(k)}$ zwischen dem geschätzten Zustandsvektor $\hat{X}_{k/k-1}$ und dem Bezugszustandsvektor $\underline{W}_{(k)}$ berechnet wird.

2. Verfahren nach Anspruch 1, dadurch gekennzeichnet, daß die Vorhersage des Zustandsvektors $\hat{\underline{X}}_{k/k-1}$ das Meßrauschen $\underline{w}_{(k)}$ auf den beobachteten Variablen berücksichtigt, wie die Stellung oder den Fehler auf der Steuerspannung $u_{(k)}$ und das Prozeßrauschen $\underline{v}_{(k)}$ auf dem Vektor $\underline{X}_k$.

3. Verfahren nach einem der Ansprüche 1 oder 2, dadurch gekennzeichnet, daß die Steuerspannung $u_{(k)}$ der Differenz zwischen der Bezugssteuerspannung $e_{(k)}$ und einer dem Produkt von $\underline{\varepsilon}_{(k)}$ entsprechenden Menge durch eine Korrekturmatrix $H^T$ entspricht.

4. Vorrichtung zur Ausführung des Verfahrens nach Anspruch 1, umfassend:

– Zustandsbeobachtungsmittel (OBSET) zur Vorhersage, bei jedem vorgegebenen Abtastzeitpunkt kT, des Wertes des Zustandsvektors $\hat{X}_{k/k-1}$ die den Wert der Stellung $x_m(k–1)$ des von dem Stellungsgeber (CAPPOS) zu dem vorausgehenden Abtastzeitpunkt (k–1)T gemessenen Kopfes empfangen, sowie den Wert der Steuerspannung $u_{(k-1)}$ zum gleichen vorausgehenden Abtastzeitpunkt,

– Mittel (MODREF) zum Speichern der Bezugssteuerspannung $e_{(k)}$ und des Bezugszustandsvektors $\underline{W}_{(k)}$ für jeden Abtastzeitpunkt kT,

– Mittel zum Vergleich (COMP) des vorhergesagten Zustandsvektors $\hat{X}_{k/k-1}$ mit dem Bezugszustandsvektor $\underline{W}_{(k)}$ und zur Berechnung ihrer Differenz $\underline{\varepsilon}_{(k)}$,

– Regelmittel (MREG), welche die Steuerspannung $u_{(k)}$ in Abhängigkeit von der Bezugsspannung $e_{(k)}$ und der Differenz $\underline{\varepsilon}_{(k)}$ zwischen dem vorhergesagten Zustandsvektor und dem Bezugszustandsvektor berechnen.

5. Vorrichtung nach Anspruch 4, wobei die Zustandsbeobachtungsmittel (OBSET) von einem KALMAN-Zustandsbeobachter gebildet werden, dessen KALMAN-Matrix konstant ist.

6. Vorrichtung nach den Ansprüchen 4 oder 5, wobei die Regelmittel (MREG) gebildet werden von:

– einer Rechenmatrix (MATCR) des Wertes $H^T$, welche die Differenz $\underline{\varepsilon}_{(k)}$ zwischen dem vorhergesagten Statusvektor und dem Bezugszustandsvektor empfängt und über einen Schalter I1 eine Korrekturspannung $e_1(k)$ abgibt.

– einem Korrekturorgan (COR), das die von den Mitteln (MODREF) zum Speichern der Bezugsspannung abgegebene Bezugsspannung $e_{(k)}$ empfängt und die Differenz zwischen $e_{(k)}$ und $e_1(k)$ bildet, wobei $e_1(k)$ dem Produkt von $H^T$ durch $\underline{\varepsilon}_{(k)}$ entspricht.

FIG. 1a

FIG. 1b

FIG. 1c

FIG. 1d

## FIG.2

## FIG.6a

$i = \alpha \cdot e(k)$

$\theta'_2$

$\theta_2$

$\theta_3$

e(k):commande de référence

$\Gamma_1$

$-I_M = -\alpha E_{GM}$

## FIG.6b

w2(k):vitesse de référence

$V'_0$

$V_0$

$\Gamma_2$

## FIG.6c

w1(k):position de référence

$\Gamma_3$

$x_{22}$

$x'_{22}$

vecteur de référence
a l'instant k

FIG.3

FIG.4

FIG.8b

FIG. 5a

FIG. 5b

FIG. 7a

FIG.7b

FIG.8a